# FASCICULE DE BREVET EUROPEEN

(11) **EP 3 774 651 B1**
(45) Date de publication et mention de la délivrance du brevet: **04.05.2022**
(21) Numéro de dépôt: 19713794.6
(22) Date de dépôt: 27.03.2019
(51) Int. Cl.: C01B 25/24, B01J 10/00, B01J 19/00, B01J 19/24, B01J 19/26, B01J 8/02, B01J 19/30, C08G 79/04

(54) **PROCEDE DE PRODUCTION D'ACIDE POLYPHOSPHORIQUE ET DISPOSITIF POUR UN TEL PROCEDE**
VERFAHREN ZUR HERSTELLUNG VON POLYPHOSPHORSÄURE UND VORRICHTUNG ZUR DURCHFÜHRUNG EINES SOLCHEN VERFAHRENS
METHOD FOR PRODUCING POLYPHOSPHORIC ACID AND DEVICE FOR SUCH A METHOD

(30) Priorité: 30.03.2018 BE 201805218; 20.12.2018 BE 201805917
(43) Date de publication de la demande: 17.02.2021
(73) Titulaire: Prayon, 4480 Engis (BE)
(72) Inventeur: HEPTIA, Bernard, 4480 Engis (BE); SZÖCS, Carl, 4480 Engis (BE); LERUTH, Denis, 4480 Engis (BE); GABRIEL, Damien, 4480 Engis (BE)
(74) Mandataire: Connor, Marco Tom
(86) Numéro de dépôt international: PCT/EP2019/057702
(87) Numéro de publication internationale: WO 2019/185698

(56) Documents cités:
- EP-B1- 1 421 030
- EP-B1- 2 411 325
- US-A- 3 272 597

## Description

### DOMAINE DE L'INVENTION

La présente invention se rapporte à un procédé et à un dispositif de production d'acide polyphosphorique (= PPA) à partir de solutions d'acide phosphorique. Le procédé de la présente invention est particulièrement efficace et permet, d'une part, de produire des solutions de PPA à des concentrations supérieures à celles actuellement disponibles sur le marché et, d'autre part, de baisser la consommation énergétique nécessaire à la production desdites solutions d'acide polyphosphorique de concentrations comparables à celles actuellement disponibles sur le marché. La présente invention permet une meilleure gestion des gaz de combustion produits par le procédé avant leur évacuation dans l'atmosphère. Enfin, la présente invention permet de produire une solution d'acide polyphosphorique de particulièrement haute concentration.

### ARRIERE-PLAN TECHNOLOGIQUE

L'acide polyphosphorique (= PPA) est un liquide visqueux qui peut être produit notamment à partir d'acide phosphorique. Il trouve des applications comme agent de déshydratation dans le secteur de la chimie fine ou des polymères, l'industrie pharmaceutique, la pétrochimie, la fabrication de produits chimiques divers. Le PPA a pour formule générale HO[P(OH)(O)O]ₙH, avec n > 1. Lorsque n = 2 le PPA est appelé communément acide pyrophosphorique ; lorsque n = 3, on parle couramment d'acide tripolyphosphorique. Pour n > 3, on parle simplement d'acide polyphosphorique, indépendamment de la valeur de n. Lorsque n = 1, on retrouve la formule de l'acide orthophosphorique. Le PPA peut notamment être produit par déshydratation et polycondensation de l'acide orthophosphorique, H₃PO₄, selon l'équation chimique (1). On obtient ainsi une solution aqueuse d'acide polyphosphorique dont la distribution en poids moléculaires des espèces dépend, entre autres, de la température de polycondensation (= Tpc).

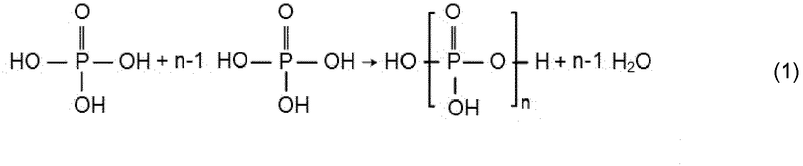

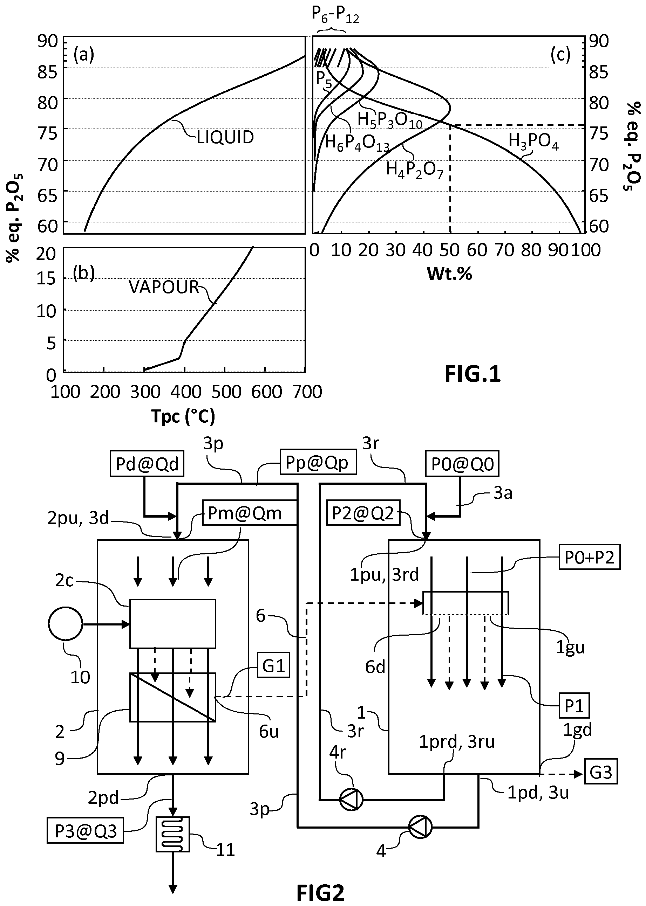

L'acide polyphosphorique se présente le plus souvent sous forme de chaines linéaires. Des formes cycliques de type métaphosphorique, voire ramifiées, peuvent cependant également exister. Comme illustré à la Figure 1, la température de polycondensation détermine la concentration en H₃PO₄ à l'équilibre à l'état liquide (Figure 1(a)) et cette dernière détermine la distribution en poids des espèces moléculaires, condensées ou non, selon les différentes valeurs de n (Figure 1(c)). Ainsi, une solution aqueuse d'acide phosphorique à concentration inférieure à environ 61% aura une fraction en poids constituée très majoritairement de molécules H₃PO₄, c'est-à-dire composé presqu'exclusivement de molécules H₃PO₄ (ou HO[P(OH)(O)O]ₙH avec n = 1). Lorsque la concentration augmente, la solution comprend de plus en plus de molécules polymérisées, la valeur de n augmentant avec la concentration en équivalents P₂O₅ tel qu'indiqué sur la Figure 1(c).

La déshydratation et polycondensation d'acide phosphorique en acide polyphosphorique requiert une évaporation de molécules d'eau qui nécessite l'apport d'énergie, généralement calorifique. Le brevet EP2411325 B1 passe en revue un certain nombre de procédés connus de production d'acide polyphosphorique et décrit un procédé par voie humide nouveau par rapport aux procédés revus permettant de bénéficier d'une grande efficacité énergétique et de limiter de façon drastique l'impact environnemental. Ce brevet décrit un dispositif résistant aux conditions opératoires très sévères de production d'acide polyphosphorique, permettant de limiter les coûts d'entretien et d'instaurer une durabilité d'équipement et enfin d'assurer la production d'un acide polyphosphorique de qualité sans contamination lors du procédé de fabrication. Le procédé décrit dans le brevet EP2411325 B1 comprend :
- une étape de pulvérisation d'une solution d'alimentation P0 du contacteur dans une flamme située dans une partie supérieure d'une chambre de combustion afin de former une solution d'acide polyphosphorique par polycondensation accompagnée de formation de gaz de combustion chauds,
- une étape de séparation de la solution d'acide polyphosphorique et des gaz de combustion chauds, et
- de manière optionnelle, une étape de mise en contact dans un contacteur gaz-acide des gaz chauds ainsi séparés avec la solution d'alimentation P0 du contacteur avant l'étape de pulvérisation de celle-ci dans la flamme.

Plusieurs avantages découlent de l'étape de mise en contact dans le contacteur gaz-acide des gaz chauds avec la solution d'alimentation P0 du contacteur. Tout d'abord, la solution d'alimentation P0 du contacteur est ainsi préchauffée et concentrée par évaporation d'eau de la solution avant l'étape de pulvérisation dans la flamme, ce qui diminue considérablement les besoins énergétiques lors de la polycondensation dans la chambre de combustion. Ensuite, les gaz de combustion peuvent contenir des gouttelettes ou vapeurs d'acide phosphorique qui, par échange lors du contact avec la solution d'alimentation P0 du contacteur, permettent d'augmenter la concentration et de former ainsi une solution d'acide phosphorique enrichi avant l'étape de pulvérisation. Il est entendu par les termes « solution d'acide phosphorique enrichi » une solution d'acide phosphorique qui comprend entre 5 et 80% P₂O₅. Enfin, l'étape de mise en contact contribue à la diminution de la température des gaz de combustion avant leur évacuation.

La présente invention constitue une amélioration du procédé décrit dans EP2411325 B1 ; elle maintient les avantages obtenus par ce procédé tout en augmentant sensiblement le rendement et en diminuant la consommation énergétique. De plus, le procédé de la présente invention permet de produire des solutions d'acide polyphosphorique à des concentrations et une pureté jamais atteintes à ce jour, avec des concentrations largement supérieures à 86% P₂O₅. La présente invention et ses avantages sont décrits plus en détails dans les sections suivantes.

### RESUME DE L'INVENTION

La présente invention est décrite dans les revendications indépendantes ci-jointes. Des variantes préférées sont définies dans les revendications dépendantes. En particulier, la présente invention concerne un procédé de production d'acide polyphosphorique P3 comprenant les étapes suivantes :
(a) introduire dans un contacteur gaz-acide, un flux d'alimentation F0 du contacteur d'une solution d'alimentation P0 d'acide phosphorique qui présente une concentration massique, xp0, comprise entre 0 et 70% P₂O₅,
(b) introduire dans le contacteur gaz-acide un flux de recirculation F2 de solution d'acide phosphorique enrichi recirculé P2,
(c) introduire dans le contacteur gaz-acide des gaz de combustion G1,
(d) contacter les flux d'alimentation F0 du contacteur et de recirculation F2 et les gaz de combustion G1 pour former, d'une part,
   - une solution d'acide phosphorique enrichi P1 comprenant une concentration massique, xp1, qui est supérieure à xp0 (xp1 > xp0) et, d'autre part,
   - des gaz de combustion contactés G3,
(e) séparer les gaz de combustion contactés G3 de la solution d'acide phosphorique enrichi P1, puis
   - évacuer les gaz de combustion contactés G3 du contacteur gaz-acide et
   - sortir la solution d'acide phosphorique enrichi P1 du contacteur gaz-acide,
(f) former à partir de ladite solution d'acide phosphorique enrichi P1, d'une part,
   - un flux de recirculation F2 de solution d'acide phosphorique enrichi recirculé P2 pour l'introduire dans le contacteur gaz-acide (1) tel que défini à l'étape (b) et, d'autre part,
   - un flux de pulvérisation Fp de la solution d'acide phosphorique enrichi P1 pour l'introduire dans une chambre de combustion,
(g) pulvériser à travers une flamme brûlant dans la partie supérieure de la chambre de combustion un flux de mélange Fm d'une solution de mélange Pm d'acide phosphorique, ayant une concentration massique xpm supérieure à celle du flux d'alimentation F0 du contacteur formé par, d'une part,
   - la solution d'acide phosphorique enrichi P1 et optionnellement, d'autre part,
   - un flux d'alimentation directe Fd d'une solution d'alimentation aqueuse directe Pd d'acide phosphorique à une concentration massique, xd, d'au moins 20%, de préférence d'au moins 40%,
   pour :
   - évaporer de l'eau et ainsi concentrer la solution de mélange Pm,
   - polymériser les molécules de la solution de mélange Pm d'acide phosphorique pour former une solution d'acide polyphosphorique P3 et
   - former des gaz de combustion G1,
(h) séparer la solution d'acide polyphosphorique P3 des gaz de combustion G1 et
   - récupérer la solution d'acide acide polyphosphorique P3, et
   - transférer les gaz de combustion G1 dans le contacteur gaz-acide (1) tel que défini à l'étape (c).

Dans une variante préférée de l'invention, la solution d'alimentation P0 du contacteur comprend une concentration xp0 d'au moins 54%, de préférence au moins 58% ou même au moins 60% P₂O₅. Le débit Q0 de la solution d'alimentation P0 du contacteur dans le contacteur exprimé par unité de puissance nominale [MW ⁻¹] de la chambre de combustion est de préférence compris entre 100 et 3000 kg / (h MW), de préférence entre 500 et 2500 kg / (h MW).

La solution d'acide phosphorique enrichi P1 est identique à la solution d'acide phosphorique recirculé P2 et comprend une concentration xp1 de préférence comprise entre 5 et 80%, de préférence au moins 60%, encore de préférence au moins 62% ou même au moins 65% P₂O₅. Le débit total, Q1 = (Qp + Q2), de la solution P1 hors du contacteur exprimé par unité de puissance nominale [MW⁻¹] de la chambre de combustion est de préférence compris entre 600 et 123000 kg / (h MW), de préférence entre 1000 et 50000 kg / (h MW). Le rapport, Qp / (Qp + Q2), entre le débit massique Qp du flux de pulvérisation Fp et le débit massique total (Qp + Q2) est de préférence inférieur à 50%, de préférence inférieur à 10%, de préférence inférieur à 5%, encore de préférence inférieur à 2.5% et dans lequel le rapport Qp / (Qp + Q2) est supérieur à 0.1%, de préférence supérieur à 0.5%.

La solution d'alimentation directe d'acide phosphorique Pd peut comprendre une concentration xpd de 20 à 80%, de préférence au moins 60%, encore de préférence au moins 62% ou même au moins 65% P₂O₅. Le débit Qd de la solution d'alimentation directe Pd dans la chambre de combustion exprimé par unité de puissance nominale [MW⁻¹] de la chambre de combustion est de préférence compris entre 0 et 1500 kg / (h MW), de préférence entre 400 et 1000 kg / (h MW).

Dans une variante de l'invention, la solution d'alimentation P0 peut comprendre au moins 40% P₂O₅. de préférence au moins 50% ou au moins 54%, encore de préférence au moins 58% ou même au moins 60% P₂O₅.

Dans une autre variante de l'invention, la solution d'alimentation P0 comprend moins de 40% P₂O₅, de préférence moins de 30% ou moins de 20%, encore de préférence moins de 5% ou même 0% P₂O₅ et dans lequel un débit Qd de la solution d'alimentation directe Pd est de préférence non-nul.

La solution de mélange Pm peut comprendre une concentration xpm de 15 à 80%, de préférence au moins 65%, encore de préférence au moins 70% ou même au moins 75% de P₂O₅. Le débit, Qd, de la solution d'alimentation directe Pd est de préférence non-nul. Le débit Qm de la solution de mélange Pm dans la chambre de combustion exprimé par unité de puissance nominale [MW⁻¹] de la chambre de combustion est de préférence compris entre 600 et 3000 kg / (h MW), de préférence entre 900 et 2000 kg / (h MW).

La solution d'acide polyphosphorique P3 peut comprendre une concentration xp3 d'au moins 76% équivalent en unités de P₂O₅, de préférence supérieure à 80%, particulièrement de préférence supérieur à 88%, ou est de préférence comprise entre 76 et 90%, encore de préférence entre 86 et 88%. Le débit Q3 de la solution P3 d'acide polyphosphorique dans la chambre de combustion exprimé par unité de puissance nominale [MW⁻¹] de la chambre de combustion est de préférence compris entre 240 et 1500 kg / (h MW), de préférence entre 600 et 3000 kg / (h MW).

Les flux d'alimentation F0 et de recirculation F2 peuvent être soit,
- mélangés avant leur introduction dans le contacteur gaz-acide pour former un flux d'un mélange de la solution d'alimentation P0 du contacteur et de la solution d'acide phosphorique enrichi recirculé P2, soit
- contactés après avoir été introduits séparément dans le contacteur gaz-acide pour former un flux d'un mélange de la solution d'alimentation P0 du contacteur et de la solution d'acide phosphorique enrichi recirculé P2.

De même, les flux d'alimentation direct Fd et de solution de pulvérisation Fp sont soit,
- mélangés pour former le flux de mélange Fm avant d'être pulvérisés dans la flamme dans la chambre de combustion, soit
- pulvérisés séparément dans la chambre de combustion pour former le flux de mélange Fm dans la flamme ou juste avant d'atteindre la flamme.

Le contact entre les flux d'alimentation F0 du contacteur et de recirculation F2 et les gaz de combustion G1 à l'étape (d) peuvent s'effectuer à co-courant ou à contre-courant, de préférence à co-courant en s'écoulant depuis une partie supérieure vers un partie inférieure du contacteur gaz-acide. Au cours de l'étape (d) de contact, un rapport (Qg1 / (Q0+Q2)) entre un débit massique Qg1 du gaz de combustion G1 introduit dans le contacteur gaz-acide et un débit massique total (Q0 + Q2) des flux d'alimentation de contact F0 et de recirculation F2 introduits dans le contacteur gaz-acide, est de préférence compris entre 0.1 et 50%, de préférence entre 0.5 et 10%, encore de préférence entre 1 et 7%.

La présente invention concerne également un dispositif de production d'acide polyphosphorique P3 suivant un procédé tel que discuté plus haut, comprenant,
(A) une chambre de combustion présentant :
   - une entrée d'acide phosphorique enrichi dans la chambre de combustion permettant l'introduction à un débit d'une solution d'acide phosphorique enrichi P1 sous forme pulvérisée dans une unité de combustion,
   - une entrée d'alimentation directe dans la chambre de combustion ou en amont de l'entrée d'acide phosphorique enrichi permettant l'introduction d'une solution d'alimentation directe Pd ou d'un mélange de solutions d'alimentation directe Pd et d'acide phosphorique enrichi P1 sous forme pulvérisée dans une unité de combustion,
   - l'unité de combustion étant agencée dans la partie supérieure de la chambre de combustion, et étant capable de former une flamme ayant une température d'au moins 1500°C par combustion d'un combustible, ladite unité de combustion comprenant :
      ∘un brûleur,
      odes connexions fluidiques entre le brûleur et, d'une part, une source d'oxygène et, d'autre part, une source de combustible permettant d'alimenter la flamme,
   - une sortie d'acide polyphosphorique de la chambre de combustion pour récupérer une phase liquide, et agencée en aval de l'unité de combustion qui est elle-même agencée en aval de l'entrée d'acide phosphorique enrichi,
   - une sortie d'évacuation de gaz de combustion G1 issu de la flamme
(B) un contacteur gaz-acide présentant
   - une entrée d'alimentation de contact reliée à une source d'une solution d'alimentation P0 du contacteur, permettant l'introduction à un débit d'alimentation de contact Q0 d'une solution d'alimentation P0 du contacteur,
   - une entrée de gaz de combustion permettant l'introduction dans le contacteur gaz-acide des gaz de combustion G1 à un débit Qg1,
   - une entrée de recirculation identique ou différente de l'entrée d'alimentation de contact, permettant l'introduction d'une solution d'acide phosphorique enrichi recirculé P2 à un débit de recirculation,
   - les entrées d'alimentation de contact et/ou de recirculation et l'entrée de gaz étant agencées pour permettre, d'une part,
      ∘un contact entre le flux d'alimentation de contact F0 et flux de recirculation F2 pour former un flux d'un mélange de la solution d'alimentation P0 du contacteur et de la solution d'acide phosphorique enrichi recirculé P2 et, d'autre part
      ∘un contact du mélange ainsi formé avec les gaz de combustion G1,
   - une ou plusieurs sorties d'acide phosphorique enrichi,
(C) une connexion fluidique de gaz de combustion reliant une extrémité couplée à la sortie d'évacuation des gaz de combustion de la chambre de combustion, à une extrémité (6d) couplée à l'entrée de gaz de combustion dans le contacteur gaz-acide,
(D) une première connexion fluidique de pulvérisation reliant une extrémité amont couplée
   - à la sortie d'acide phosphorique enrichi du contacteur gaz acide ou
   - à un point d'embranchement avec une première connexion fluidique qui est couplée à la sortie d'acide phosphorique enrichi,
   à une extrémité avale couplée à l'entrée d'acide phosphorique enrichi (2pu) dans la chambre de combustion
**Caractérisé en ce que** le dispositif comprend en outre
(E) une connexion fluidique de recirculation (3, 3r) reliant une extrémité amont couplée,
   - à une sortie d'acide phosphorique enrichi recirculé (1pd) du contacteur gaz-acide (1) ou
   - à un point d'embranchement (5) avec la première connexion fluidique (3),
   à une extrémité avale (3r) couplée,
   - à l'entrée de recirculation (1 pru) du contacteur gaz-acide (1) ou
   - à une connexion d'alimentation de contact (3a) alimentant le contacteur gaz-acide en solution d'alimentation P0 du contacteur, et
(F) des moyens pour contrôler et maintenir un rapport, Qp / (Qp + Q2), entre un débit massique de pulvérisation Qp s'écoulant dans la connexion fluidique de pulvérisation (3p) et un débit massique total (Qp + Q2) défini comme la somme du débit massique de pulvérisation Qp et d'un débit massique de recirculation Q2 s'écoulant dans la connexion fluidique de recirculation (3r) à une valeur inférieure à 50%, de préférence inférieure à 10%, de préférence inférieure à 5%, encore de préférence inférieure à 2.5% et dans lequel le rapport Qp / (Qp + Q2) a une valeur supérieure à 0.1%, de préférence supérieure à 0.5%.

### BREVE DESCRIPTION DES FIGURES.

Différents aspects de la présente invention sont illustrés dans les Figures suivantes.
- **Figure 1** :: illustre graphiquement la relation entre la température d'ébullition et la concentration en P₂O₅ à l'équilibre de la phase liquide (partie (a)) et de la phase vapeur (partie (b)), ainsi que la relation entre la concentration en P₂O₅ et la distribution en poids des espèces moléculaires selon les différentes valeurs de n (partie (c)).
- **Figure 2** :: illustre une variante de dispositif selon la présente invention.
- **Figure 3** :: reporte des valeurs d'une sélection de paramètres illustratives du procédé selon la présente invention.
- **Figure 4** :: illustre une variante de dispositif selon la présente invention.
- **Figure 5** :: illustre une variante de dispositif selon la présente invention.

### DESCRIPTION DETAILLEE DE L'INVENTION

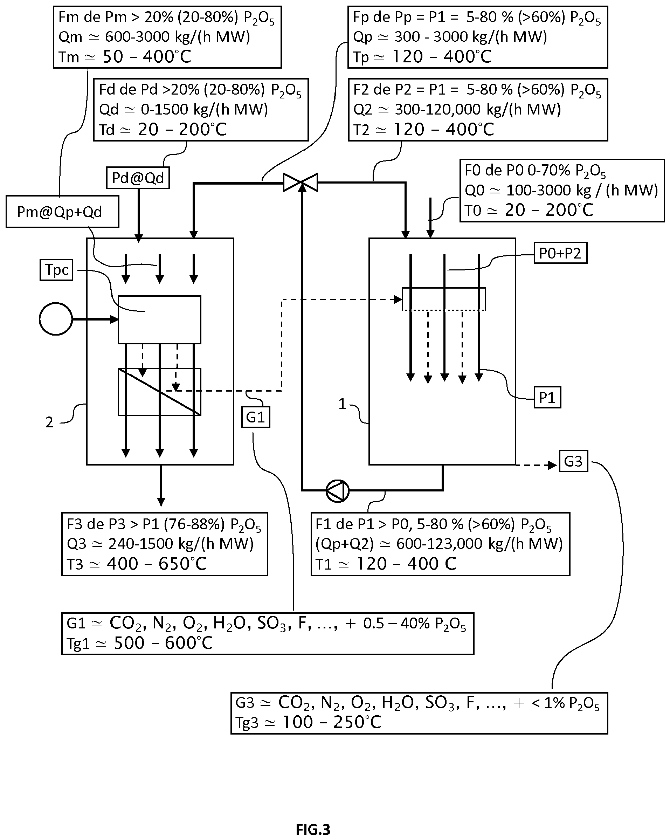

Les Figures 2 à 5 illustrent le procédé et des variantes non exhaustives de dispositifs permettant de mettre en oeuvre ledit procédé. Dans la suite, le terme « flux » représenté par la lettre « F » est utilisé dans son interprétation communément acceptée d'écoulement d'un fluide. Seule la Figure 3 indique les flux par la lettre « F ». Les autres Figures illustrant des dispositifs indiquent des débits « Q » correspondant aux flux « F » de la Figure 3. Le terme « débit » représenté par la lettre « Q » caractérise la masse du flux par unité de temps et est exprimé en [kg / s] ou [kg / h]). Le terme « débit », même utilisé seul, définit donc un débit massique.

### Conventions et Définitions

Sauf mention contraire dans ce brevet, le terme concentration est utilisé pour exprimer des concentrations massiques (pourcentages en poids, ^{w}/ₒ). Pour définir la teneur en l'espèce qui nous occupe principalement, lorsque l'on parle de concentration des solutions d'acide phosphorique ou autres, il faut entendre la teneur en poids exprimée en unités d'équivalents P₂O₅, que nous écrirons « % eq. P₂O₅ » ou encore « % P₂O₅ ». En ce qui concerne les flux gazeux, comme par exemple les gaz de combustion, où plusieurs espèces d'intérêt peuvent coexister en fonction des conditions opératoires, sous forme gazeuse ou liquide (par exemple par entraînement de gouttelettes), voire éventuellement solide (fumées), la concentration dans ces flux est également exprimée en unités d'équivalents P₂O₅ (en poids, ^{w}/ₒ). La dissociation ionique des espèces qui nous intéressent n'est pas considérée dans ce texte. Pour information, la concentration d'une solution d'acide phosphorique peut également être parfois exprimée en unités d'équivalents H₃PO₄. La correspondance entre les deux unités de concentration est définie par la relation : 1 eq. P₂O₅ = 0.7245 eq. H₃PO₄.

Il est entendu dans ce texte par les expressions
- « Solution d'acide phosphorique », une solution aqueuse comprenant du HO[P(OH)(O)O]ₙH, avec n ≥ 1
- « Acide orthophosphorique », une solution aqueuse comprenant très majoritairement du HO[P(OH)(O)O]ₙH, avec n = 1, c'est-à-dire une solution aqueuse d'acide phosphorique contenant moins de 61% en poids de P₂O₅ ;
- « Solution d'acide polyphosphorique » (= PPA), une solution aqueuse comprenant majoritairement du HO[P(OH)(O)O]ₙH, avec n > 1 ; c'est-à-dire une solution aqueuse d'acide phosphorique contenant plus de 76% en poids de P₂O₅;
- « polycondensation de l'acide phosphorique ou orthophosphorique », la polycondensation des molécules considérées telle que représentée par les équations (1) et/ou (2) ci-dessous.
- Solution aqueuse comprenant du phosphore », une solution contenant du phosphore dissout sous forme d'espèces de type orthophosphate ou polyphosphates. Selon la teneur en P2O5 de ces solutions, les espèces ortho ou poly phosphates peuvent être présentes comme présenté en figure 1(c). Ces espèces peuvent être présentes sous formes d'ions.

### Procédé - contacts gaz-acide

Le procédé de la présente invention comprend l'introduction dans un contacteur gaz-acide (1) des flux suivants.
- Un flux d'alimentation F0 de solution d'alimentation P0 du contacteur à un débit d'alimentation Q0. La solution d'alimentation P0 est une solution aqueuse d'acide phosphorique à une concentration massique xp0 comprise entre 0 et 70% P₂O₅. Dans une variante de la présente invention, la solution P0 est de l'eau. Dans ce cas, une autre source d'acide phosphorique contenant du P₂O₅, appelée la solution d'alimentation directe Pd, est nécessaire pour la production d'acide polyphosphorique P3 ; cette production est discutée plus bas dans la section « Procédé - Polycondensation ». Dans une variante alternative de la présente invention, la solution P0 est une solution d'acide phosphorique et comprend du P₂O₅ (xp0>0). Par exemple, la solution d'alimentation de contact P0 peut comprendre une concentration xp0 d'au moins 40% P₂O₅, de préférence d'au moins 50%, ou même d'au moins 54% ou d'au moins 58%, encore de préférence d'au moins 60% ou même d'au moins 65% P₂O₅. La solution d'alimentation P0 comprend généralement moins de 62% P₂O₅ mais des concentrations plus élevées de la solution d'alimentation ne gênent en rien le procédé, surtout en cas d'absence d'une source de solution d'alimentation directe Pd d'acide phosphorique (voir la section « Procédé - Polycondensation »). A de telles concentrations, la solution d'alimentation P0 est constituée principalement d'acide orthophosphorique H₃PO₄ en solution aqueuse (cf. Figure 1(c)), mais peut contenir des molécules condensées (n > 1).
   Le débit Q0 de la solution P0 dans le contacteur, exprimé par unité de puissance nominale [MW⁻¹] de la chambre de combustion, est de préférence compris entre 100 et 3000 kg / (h MW), de préférence entre 500 et 2500 kg / (h MW).
- Un flux de recirculation F2 de solution d'acide phosphorique enrichi recirculé P2 qui sera défini en détails plus loin. Le débit Q2 de la solution d'acide phosphorique enrichi recirculé P2 dans le contacteur exprimé par unité de puissance nominale [MW⁻¹] de la chambre de combustion peut être compris entre 300 et 120000 kg / (h MW), de préférence entre 600 et 100000 kg / (h MW), de préférence entre 9000 kg / (h MW) et 90000 kg / (h MW). Le flux de recirculation F2 de solution d'acide phosphorique enrichi recirculé P2 est le fruit de la mise en contact d'un mélange des flux d'alimentation F0 et de recirculation F2 de solution d'acide phosphorique enrichi recirculé P2 d'un cycle antérieur avec un flux de gaz de combustion G1.
- Un flux de gaz de combustion G1 qui sont formés lors de la polycondensation d'un flux de mélange Fm d'une solution de mélange de solution d'acide phosphorique Pm comprenant une concentration massique xpm supérieure à celle du flux d'alimentation de contact F0 dans une chambre de combustion ; ces deux flux seront décrits et discutés en détails plus loin. Le flux de gaz de combustion G1 comprend diverses molécules contenant du phosphore, sous forme de gouttelettes ou de vapeurs, emportées depuis la chambre de combustion vers le contacteur gaz-acide. Par exemple, le flux de gaz de combustion G1 peut comprendre entre 0.5 et 40% P₂O₅.

Les flux d'alimentation F0 et de recirculation F2 et les gaz de combustion G1 sont donc mis en contact les uns avec les autres dans le contacteur gaz-acide (on parle donc d'un contacteur gaz-acide direct) pour former, d'une part, une solution d'acide phosphorique enrichi P1 et, d'autre part, des gaz de combustion contactés G3.

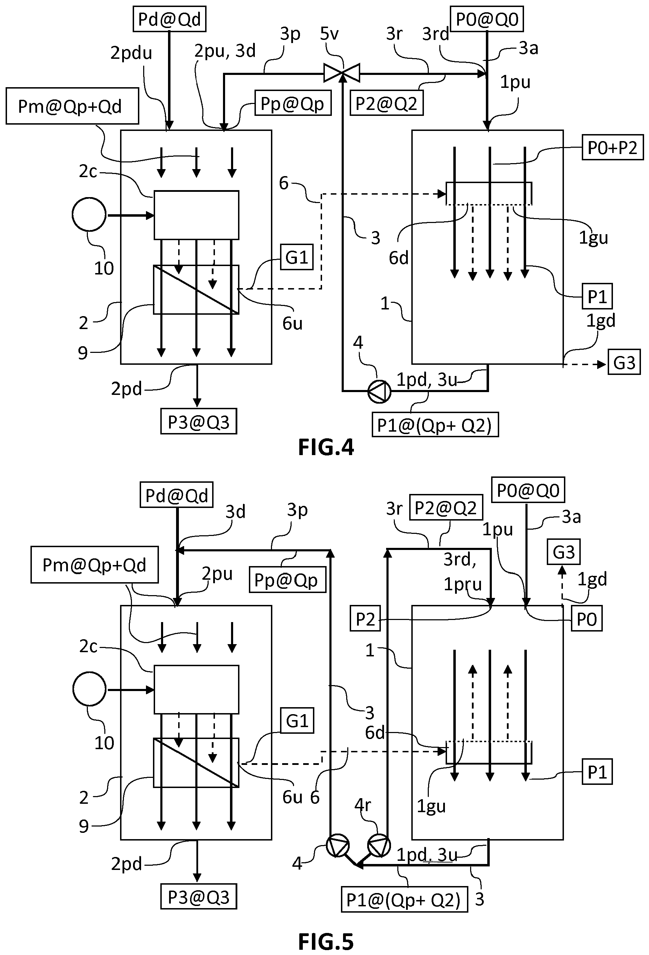

Dans une variante préférée, illustrée dans les Figures 2 & 4, les flux d'alimentation F0 et de recirculation F2 sont mélangés avant leur introduction dans le contacteur gaz-acide pour former un flux d'un mélange de la solution d'alimentation P0 du contacteur et de la solution d'acide phosphorique enrichi recirculé P2. Pour cela il suffit d'embrancher un conduit de recirculation (3r) acheminant le flux F2 et un conduit d'alimentation (3a) acheminant le flux F0 en amont d'une entrée (1pu) du contacteur gaz-acide (1). Les pressions dans les conduits de recirculation (3r) et d'alimentation (3a) doivent être contrôlées afin d'éviter un reflux de liquide dans une des deux conduites embranchées. La Figure 2 montre une conduite d'alimentation (3a) embranchée dans la conduite de recirculation (3r), alors que la Figure 4 illustre une conduite de recirculation (3r) embranchée dans une conduite d'alimentation (3a). Dans les deux configurations, les gaz de combustion G1 sont alors mis en contact avec le mélange de flux de solutions (F0+F2) ainsi formé après l'introduction de ce dernier dans le contacteur gaz-acide (1).

Dans une variante alternative, illustrée aux Figures 3 & 5, les flux d'alimentation F0 et de recirculation F2 sont contactés après avoir été introduits séparément dans le contacteur gaz-acide pour former un flux d'un mélange de la solution d'alimentation P0 du contacteur et de la solution d'acide phosphorique enrichi recirculé P2. Les flux d'acide phosphorique F0 et F2 et de gaz de combustion G1 sont ainsi tous mis en contact dans le contacteur gaz-acide. Il suffit de prévoir dans le contacteur gaz-acide une entrée (1 pu) de flux d'alimentation F0 séparée d'une entrée (1pru) de flux de recirculation F2.

Le contact entre les flux d'alimentation F0 et de recirculation F2 ou leur mélange (F0+F2) et les gaz de combustion G1 dans le contacteur gaz-acide peut s'effectuer par contact de flux à co-courant ou à contre-courant. En particulier, les phases liquides s'écoulent vers le bas dans le sens de la gravité, et la phase gazeuse remonte vers le haut. Dans une variante préférée, les deux ou trois flux s'écoulent à co-courant depuis une partie supérieure vers une partie inférieure du contacteur gaz-acide. Dans le contexte de la présente invention, les termes « supérieur » et « inférieur » se comprennent suivant la direction des forces de la gravité terrestre qui s'étendent en direction du centre de gravité de la terre. Ainsi, en l'absence de gradients de pression, un liquide s'écoule naturellement de la partie supérieure d'un réacteur vers sa partie inférieure qui se trouve en aval de la partie supérieure suivant la direction de la gravité terrestre.

Il est possible de contacter les gaz de combustion G1 avec les flux d'alimentation et de recirculation d'acide phosphorique F0 & F2 ou leur mélange (F0+F2) en guidant les gaz de combustion dans un flux transversal à ceux des acides phosphoriques. La mise en contact selon des flux co-courants est cependant préférée.

Le contact entre les flux d'alimentation F0 et de recirculation F2 ou leur mélange (F0+F2) et les gaz de combustion G1 forme une solution d'acide phosphorique enrichi P1 et des gaz de combustion contactés G3. Ce contact peut s'effectuer en faisant percoler les flux à travers un matériau de remplissage qui résiste aux conditions opératoires. Lors du contact entre gaz de combustion G1 et les flux d'alimentation F0 et de recirculation F2 des échanges se produisent. D'une part, les molécules contenant du phosphore transportées par les gaz de combustion sous forme de gouttelettes et/ou de vapeur sont emportées par les flux F0 et F2, permettant la formation de la solution d'acide phosphorique enrichi P1 caractérisé par une teneur en P₂O₅⁻ supérieure ou égale à celles de chacun des flux F0 et F2. D'autre part, un échange de chaleur s'effectue entre les gaz de combustion chaud, à une température Tg1 de l'ordre de 500 à 600°C, vers les solutions aqueuses des flux F0 et F2, qui sont à des températures inférieures telles qu'indiquées à la Figure 3. Les gaz contactés G3 sont donc à une température Tg3 < Tg1 facilitant leurs traitements postérieurs en vue de leur évacuation dans l'atmosphère. En même temps, la solution d'acide phosphorique enrichi P1 est ainsi à une température T1 supérieure à celle du mélange des solutions P0 et P2 ; T1 est supérieure à la température T0 de la solution d'alimentation P0 (qui peut être de l'ordre de 20 à 200°C) et est sensiblement égale à la température T2 de la solution d'acide phosphorique enrichi recirculé P2 puisqu'il s'agit de la même solution à deux extrémités de la boucle de recirculation (3r).

La solution d'acide phosphorique enrichi P1 et les gaz de combustion contactés G3, formés à la suite de la mise en contact des flux d'alimentation et de recirculation d'acide phosphorique F0 & F2 avec les gaz de combustion G1, sont alors séparés par des moyens de séparation bien connus de l'homme du métier, tels qu'un séparateur par gravité ou centrifuge, un coalesceur, un dévésiculeur, un matelas, des chicanes, etc. Les gaz de combustion contactés G3 sont alors évacués du contacteur gaz-acide (1) pour des traitements ultérieurs à une température sensiblement inférieure à celle des gaz de combustion contactés G3 introduits dans ledit contacteur gaz-acide. Comme la majeure partie du phosphore contenus dans le flux de gaz de combustion G1 est transférée dans le flux F1 de solution d'acide phosphorique enrichi P1 lors du contact du flux G1 avec les flux F0 et F2, le flux de gaz contactés G3 est beaucoup plus pauvre en P₂O₅ que le flux de gaz de combustion G1, avec des teneurs qui peuvent être inférieures à 1% P₂O₅.

Les gaz de combustion contactés G3 peuvent également subir un lavage après leur sortie du contacteur gaz-acide, avec une solution aqueuse de lavage afin de dissoudre et éliminer les composés indésirables (par exemple des composés fluorés, chlorés ou souffrés, etc.) avant de relâcher les gaz dans l'atmosphère. D'autres traitements des gaz de combustion contactés G3 sont possibles, incluant par exemple la condensation des gaz dans un condenseur indirect. La solution d'acide phosphorique enrichi P1 est également sortie du contacteur gaz-acide, séparément des gaz de combustion contactés G3.

### Procédé -flux F1 et division en flux Fp et F2

La solution d'acide phosphorique enrichi P1 peut comprendre une concentration xp1 de 5 à 80% P₂O₅, de préférence au moins 60%, encore de préférence au moins 62% ou même au moins 65%. La concentration de la solution d'acide phosphorique enrichi P1 dépend bien entendu de la concentration de la solution d'alimentation P0 et du flux de gaz de combustion G1. Comme discuté plus bas, la concentration de la solution de pulvérisation Pp est en général supérieure à celle de la solution d'alimentation P0.

La solution d'acide phosphorique enrichi P1 est divisée en deux flux distincts avant, pendant ou après son évacuation du contacteur gaz-acide :
- un flux de recirculation F2 de solution d'acide phosphorique enrichi recirculé P2 pour l'introduire dans le contacteur gaz-acide (1) à travers une boucle de recirculation (3r) pour le mettre en contact avec le flux d'alimentation F0 et les gaz de combustion G1 tel que décrit supra, et
- un flux de pulvérisation Fp d'une solution de pulvérisation Pp pour l'introduire dans une chambre de combustion (2).

La solution de pulvérisation Pp et la solution d'acide phosphorique enrichi recirculé P2 sont identiques en composition entre elles et identiques à la solution d'acide phosphorique enrichi P1, (P1 = Pp = P2), puisqu'elles n'ont subi aucune altération entre le moment de leur formation dans le contacteur gaz-acide et la division en deux flux distincts de recirculation F2 et de pulvérisation Fp. Les températures, Tp, T2, des solutions Pp et P2 sont également sensiblement identiques à la température T1 de la solution P1 qui peut être de l'ordre de 120 à 400°C. Les solutions Pp et P2 comprennent de préférence, en régime stationnaire, une valeur d'équivalents en unité de P₂O₅ plus élevée que celle de la solution d'alimentation P0 du contacteur. Ceci s'explique par deux raisons principales.

Premièrement, la mise en contact des flux d'alimentation et de recirculation d'acide phosphorique avec les gaz de combustion G1 qui sont à une température Tg1 plus élevée de l'ordre de 500 à 600°C (cf. Figure 3), entraîne l'évaporation d'une partie de l'eau contenue dans la phase aqueuse des solutions d'acide phosphorique P0 et P2, ce qui augmente de facto la concentration en P₂O₅.

Deuxièmement, comme nous le discuterons plus loin, les gaz de combustion G1 formés lors de la polycondensation entre autres du flux de pulvérisation Fp de solution de pulvérisation Pp dans la chambre de combustion comprennent du P₂O₅ sous forme de gouttelettes ou de vapeurs. Les gaz de combustion G1 peuvent comprendre entre 0.5 et 40% P₂O₅, de préférence entre 1 et 30%, de préférence entre 2 et 25%, ou entre 5 et 20% (cf. Figure 3). Lors du contact avec les flux d'alimentation et de recirculation de solutions P0 et d'acide phosphorique enrichi recirculé P2, la majeure partie de ces molécules sont transférées des gaz de combustion vers le mélange de solution d'acides (P0+P2). Après contact, les gaz de combustion contactés G3 contiennent beaucoup moins de molécules contenant du phosphore qu'avant le contact, en général moins de 0.1% P₂O₅ (cf. Figure 3). Par ce transfert de molécules vers le mélange d'acides, la concentration en P₂O₅ de celui-ci augmente.

Dans une variante de l'invention, la solution d'acide phosphorique enrichi P1 est divisée en deux flux de pulvérisation Fp et de recirculation F2 à la sortie du contacteur gaz-acide dans une connexion fluidique de pulvérisation (3p) et dans une connexion fluidique de recirculation (3r), respectivement, tel qu'illustré à la Figure 2. Chacune des connexions fluidiques (3p) et (3r) est équipée d'un système de pompage (4, 4r) pour assurer les débits et un flux de pulvérisation Fp à un débit de pulvérisation Qp vers une chambre de combustion (2) et pour entraîner le flux de recirculation F2 à un débit Q2 vers le contacteur gaz-acide formant ainsi une boucle de recirculation.

Dans une variante alternative, la solution d'acide phosphorique enrichi P1 est sortie du contacteur gaz-acide dans une première connexion fluidique (3) ou (3u) qui est commune et se divise en deux en un point d'embranchement (5) en « T » ou en « Y » avec, d'une part, la connexion fluidique de pulvérisation (3p) qui entraîne le flux de pulvérisation Fp à un débit Qp, vers une chambre de combustion (2) et, d'autre part, une connexion fluidique de recirculation (3r) qui entraîne le flux de recirculation F2 à un débit Q2 vers le contacteur gaz-acide, formant ainsi une boucle de recirculation. Différentes variantes de cette configuration comprenant un point d'embranchement (5) sont illustrées aux Figures 3 à 5. Les débits de pulvérisation Qp et de recirculation Q2 peuvent être assurés par une ou plusieurs valves (cf. Figure 3 et 4), par des pompes (4, 4r) sur chacune des branches du point d'embranchement (5) (cf. Figure 5) et/ou par des sections de conduits de pulvérisation (3p) et de recirculation (3r) dimensionnées pour obtenir les débits désirés ou par tout autre moyen bien connu et utilisé industriellement pour répartir un flux entre 2 alimentations (par exemple, des conduites en T ou en Y avec jeux de vannes régulées ou non).

La solution d'acide phosphorique enrichi P1 sort du contacteur à un débit total, Q1 = (Qp + Q2). Le débit total Q1, exprimé par unité de puissance nominale [MW⁻¹] de la chambre de combustion, est de préférence compris entre 600 et 123000 kg / (h MW) ou entre 1000 et 120000 kg / (h MW), de préférence entre 12000 et 100000 kg / (h MW). Comme discuté plus haut, le flux F1 d'acide phosphorique enrichi P1 est divisé en deux flux Fp et F2 ayant chacun un débit de pulvérisation Qp et un débit de recirculation Q2. La division en deux flux peut se faire avant la sortie du contacteur gaz-acide, à la sortie de celui-ci, ou après la sortie. Les débits de pulvérisation Qp et de recirculation Q2 doivent être déterminés en fonction *inter alia* de la capacité de la chambre de combustion et du contacteur gaz-acide, de la température des gaz de combustion G1 et leur teneur en P₂O₅.

Dans un état stationnaire de production, le rapport, Qp / (Qp + Q2) entre le débit massique Qp du flux de pulvérisation Fp et le débit massique total (Qp + Q2) du flux d'acide phosphorique enrichi F1 (F1 est en fait la somme des flux de pulvérisation Fp et de recirculation F2) est de préférence inférieur à 50%, de préférence inférieur à 20% et encore de préférence inférieur à 10%. Dans une variante préférée de l'invention le rapport Qp / (Qp + Q2) est inférieur à 5%, de préférence inférieur à 4%, encore de préférence inférieur à 2.5% et même inférieur à 2%. Le rapport Qp / (Qp + Q2) est de préférence supérieur à 0.1 % ou encore supérieur à 0.2% et de préférence supérieur à 0.5%. Augmenter le débit Q2 par rapport au débit Qp permet, d'une part, de refroidir les gaz de combustion G1 à une température plus basse, ce qui est nécessaire avant leur évacuation et, d'autre part, d'enrichir davantage en P₂O₅ la solution d'acide phosphorique enrichi Pp.

Le rapport, Q2 / (Qp + Q2) entre le débit massique Q2 du flux de recirculation F2 et le débit massique total (Qp + Q2) est bien entendu le complémentaire du rapport Qp / (Qp + Q2), dont la somme fait 100%. Le débit de recirculation Q2 est donc de préférence supérieur ou égal au débit de pulvérisation Qp et, dans certaines variantes préférées, est considérablement supérieur à Qp avec un rapport de débits Qp / Q2 pouvant aller de 0.1 / 99.9 à 49 / 51 (= 0.1 à 96%). De préférence, le rapport de débits Qp / Q2 est compris entre 1 / 99 et 5 / 95 (= 1 à 5.3%).

Comme discuté plus haut, le débit Q2 de la solution d'acide phosphorique enrichi recirculé P2 dans le contacteur, exprimé par unité de puissance nominale [MW⁻¹] de la chambre de combustion, peut être compris entre 300 et 120000 kg / (h MW), de préférence entre 600 et 110000 kg / (h MW), de préférence entre 9000 et 90000 kg / (h MW). Ainsi, le débit Qp de la solution de pulvérisation Pp s'écoulant vers la chambre de combustion, exprimé par unité de puissance nominale [MW⁻¹] de la chambre de combustion, peut être compris entre 300 et 3000 kg / (h MW), de préférence entre 600 et 2000 kg / (h MW), de préférence entre 1000 et 1500 kg / (h MW).

### Procédé - Flux Fp, Fd et Fm

Un flux de mélange Fm d'une solution de mélange Pm ayant une concentration massique xpm supérieure à celle du flux d'alimentation de contact F0 est pulvérisé à travers une flamme brûlant dans la partie supérieure d'une chambre de combustion (2) pour :
- évaporer de l'eau et ainsi concentrer la solution de mélange Pm,
- obtenir par polymérisation de l'acide polyphosphorique P3 et
- former des gaz de combustion G1.

Le flux de mélange Fm est formé au moins par le flux de pulvérisation Fp qui est introduit dans la chambre de combustion (2). Dans une variante préférée, le flux de mélange Fm est formé, d'une part, du flux de pulvérisation Fp et, d'autre part, d'un flux d'alimentation directe Fd d'une solution d'alimentation directe Pd d'acide phosphorique.

Dans la variante comprenant un flux d'alimentation directe Fd, la solution d'alimentation directe d'acide phosphorique Pd comprend une concentration xd d'au moins 20%, de préférence d'au moins 40%. De préférence la concentration xd est comprise de 20 à 80%, de préférence au moins 60%, encore de préférence au moins 62% ou même au moins 65% P₂O₅.Le débit Qd de la solution d'alimentation directe Pd dans la chambre de combustion exprimé par unité de puissance nominale [MW⁻¹] de la chambre de combustion est de préférence compris entre 0 et 1500 kg / (h MW), de préférence entre 100 et 1000 kg / (h MW), de préférence entre 400 et 700 kg / (h MW) . Un débit Qd = 0 kg / (h MW) correspond bien entendu à la variante de la présente invention ne comprenant pas de flux d'alimentation directe Fd. La température de la solution d'alimentation directe Fd peut être comprise entre 20 et 200°C, de préférence entre 40 et 150°C, encore de préférence entre 50 et 100°C. Un préchauffage de la solution Fd est avantageux en termes d'efficacité de la combustion de la solution de mélange Fm dans la flamme.

Dans un état stationnaire de production, le rapport, Qp / Q0, entre le débit Qp du flux de pulvérisation Fp et le débit Q0 du flux d'alimentation F0 est de préférence compris entre 100 et 250%, de préférence entre 101 et 140%, de préférence entre 110 et 115%. Ce rapport peut être plus élevé que 100% car le contact des flux Q0 et Q2 avec les gaz de combustion dans le contacteur gaz-liquide augmente la masse du flux F1 sortant du contacteur gaz-liquide. La valeur de ce rapport peut diminuer dès lors que la valeur du débit d'alimentation directe, Qd, augmente.

Le rapport de débits Qd / (Qp + Qd) entre le débit d'alimentation directe Qd et la somme des débits de pulvérisation Qp et d'alimentation directe Qd représente la fraction de débit de solution d'alimentation directe Pd entrant dans la chambre de combustion. La valeur de ce rapport dépend *inter alia* de la teneur en P₂O₅ de la solution d'alimentation P0, qui est déterminante pour la teneur en P₂O₅ de la solution de pulvérisation Pp.

Dans le cas où la solution d'alimentation P0 comprend au moins 40% P₂O₅, de préférence au moins 50% ou au moins 54%, encore de préférence au moins 58% ou même au moins 60% P₂O₅, la concentration de la solution de pulvérisation est élevée et le rapport de débits Qd / (Qp + Qd) peut être bas, c'est-à-dire que l'apport en solution d'alimentation directe Pd peut être bas, voire nul. Par exemple, le rapport Qd / (Qp + Qd) peut être compris entre 0 et 50%, de préférence entre 5 et 30% ou entre 10 et 20%.

Dans le cas où la solution d'alimentation P0 comprend moins de 40% P₂O₅, de préférence moins de 30% ou moins de 20%, encore de préférence moins de 5%, ou même 0% P₂O₅, la concentration en P₂O₅ de la solution de pulvérisation est basse, voire nulle. Il peut alors être avantageux, voire nécessaire en cas d'une teneur de 0% P₂O₅ (= eau) d'augmenter la concentration massique de la solution de mélange Pm en introduisant dans la flamme la solution d'alimentation directe à un débit Qd. Le rapport Qd / (Qp + Qd) est alors de préférence compris entre 40 et 99%, encore de préférence entre 50 et 90% ou entre 60 et 75%. Il est préférable, si la solution d'alimentation de contact P0 comprend une concentration xp0 comprise entre 0 et 49%, de préférence compris entre 1 et 45%, encore de préférence au plus 40%, voire au plus 20% ou même au plus 10% P₂O₅ que le débit d'alimentation directe Qd soit alors de préférence non-nul.

Pour un débit Qd > 0, le flux d'alimentation directe Fd peut être pulvérisé directement dans la flamme pour former le flux de mélange Fm directement dans ou en amont de la flamme. De manière alternative, le flux d'alimentation directe peut être pré-mélangé avec le flux de pulvérisation Fp avant d'introduire le mélange Fm des deux flux dans la chambre de combustion. Dans le premier cas, la chambre de combustion comprendrait une entrée séparée pour introduire le flux d'alimentation directe Fd. Dans le second cas, le mélange entre les flux de pulvérisation Fp et d'alimentation directe Fd se ferait en amont de l'entrée (2pu) d'acide phosphorique enrichi. Le rapport entre le débit de flux d'alimentation directe Fd introduit dans la chambre de combustion et le débit de flux d'alimentation F0 introduit dans le contacteur est tel que décrit plus haut.

Indépendamment de la valeur du rapport Qd / (Qp + Qd), la solution de mélange Pm comprend de préférence une concentration xpm de 20 à 80%, de préférence au moins 40%, de préférence au moins 65%, encore de préférence au moins 70% ou même au moins 75% P₂O₅. Le débit Qm de la solution Pm dans la chambre de combustion est la somme des débits de pulvérisation Qp et d'alimentation directe Qd. Exprimé par unité de puissance nominale [MW⁻¹] de la chambre de combustion le débit de mélange Qm est de préférence compris entre 600 et 3000 kg / (h MW), de préférence entre 900 et 2000 kg / (h MW).

### Procédé -Polycondensation

La combustion dans la flamme de la solution de mélange Pm forme une solution d'acide polyphosphorique P3 par polycondensation des molécules de l'acide phosphorique contenu dans la solution Pm et forme des gaz de combustion G1.

La température atteinte par la solution d'acide polyphosphorique P3 dans la flamme est un paramètre important du procédé puisque la concentration en P₂O₅ obtenue dans cette solution en est dépendante comme le montre le graphe de la Figure 1(a). Il est aussi important de maintenir la solution de mélange Pm en contact avec la flamme et les gaz de combustion durant un temps de séjour suffisant à la température de polycondensation Tpc requise pour obtenir la concentration en P₂O₅ attendue et assurer la transformation en acide polyphosphorique.

La flamme est alimentée par un combustible et une source d'oxygène, typiquement de l'air ou, pour une température supérieure, de l'oxygène. La flamme est de préférence une flamme légèrement oxydante, de préférence entre 1 à 5% en volume d'excès d'air, de préférence entre 2 et 3% en volume. Le combustible est de préférence du gaz naturel, du butane, propane, ou tout autre combustible qu'il soit gazeux ou liquide. En l'absence de pulvérisation de la solution de mélange Pm, la flamme atteint de préférence une température théorique d'au moins 1000°C, de préférence au moins 1500°C, encore de préférence au moins 1700°C, par exemple 1800°C ± 50°C. Dans le procédé de la présente invention, l'accroissement de température est instantanément limité car, d'une part, la solution de mélange Pm est alimentée à une température Tm inférieure, de l'ordre de 50-400°C et, d'autre part, car la réaction de polycondensation et l'évaporation des molécules d'eau de la solution et formées lors de la polycondensation sont énergivores.

En l'absence d'un flux d'alimentation directe Fd (i.e., Qd = 0), seule la solution de pulvérisation Pp est pulvérisée dans la flamme. Si le débit d'alimentation directe Qd est non nul, les flux d'alimentation direct Fd et de solution de pulvérisation Fp peuvent être mélangés pour former le flux de mélange Fm avant d'être pulvérisés dans la flamme dans la chambre de combustion, tel qu'illustré dans les Figures 2 & 5. Alternativement, les deux flux peuvent être pulvérisés séparément dans la chambre de combustion pour former le flux de mélange Fm dans la flamme ou juste avant d'atteindre la flamme, tel qu'illustré dans les Figures 3 & 4.

Il est préférable que la solution de mélange pulvérisée dans la flamme atteigne une température de polycondensation Tpc d'au moins 400°C, de préférence au moins 500°C et même supérieure à 550°C, voire de l'ordre de 650°C ou 700°C, pendant un temps de polycondensation prédéfini. Une température de polycondensation Tpc élevée permet d'obtenir des solutions d'acide polyphosphorique à haute concentration en P₂O₅, de l'ordre de 86% et plus, équivalent en unités P₂O₅ avec des longueurs de chaînes n plus longues (e.g., n ≥ 5 à 12) (cf. Figure 1(c)). Les températures nécessaires à la polycondenstion de l'acide phosphorique exigent des matériaux résistants chimiquement et thermiquement pour les différents éléments du dispositif de réaction. La solution de mélange Pm, qui comprend des molécules d'acide orthophosphorique et des chaînes polymères d'acide polyphosphorique (de m+1 unités condensées) subit une réaction de polycondensation sous l'action de la température pour libérer de l'eau et former des chaînes polymériques plus longues , selon l'équation (1) décrite supra et selon l'équation chimique (2) (avec m ≥ 1 et r ≥ 1) :

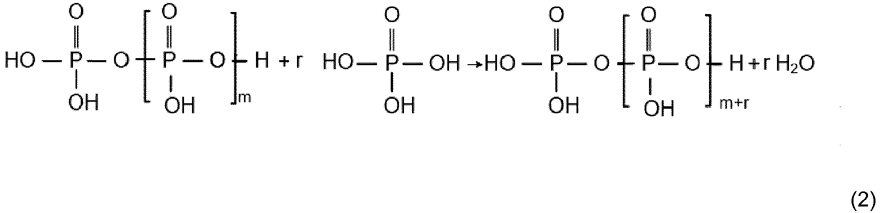

La solution d'acide polyphosphorique P3 ainsi formée est alors séparée des gaz de combustion G1 formés lors de la polycondensation de l'acide phosphorique dans un séparateur gaz-liquide (9). La solution d'acide polyphosphorique P3 est récupérée alors que les gaz de combustion G1 sont transférés dans le contacteur gaz-acide (1) pour être mis en contact avec les flux d'alimentation F0 et de recirculation F2, tel que décrit plus haut.

Le flux F3 de la solution d'acide polyphosphorique P3 ainsi récupérée peut avoir une température élevée de l'ordre de 350 à 700°C, de préférence 400 à 650°C, selon la température de polycondensation Tpc utilisée. Il est préférable de refroidir la solution P3 dans un échangeur de chaleur (11) (cf. Figure 2) à une température de l'ordre de 100 à 200°C, par exemple entre 110 et 150°C, de préférence entre 120 et 130°C ce qui permet un plus grand choix de matériaux pour la cuve de stockage de l'acide polyphosphorique ainsi formé et refroidi, tout en maintenant la solution à l'état liquide.

L'acide polyphosphorique P3 ainsi formé et récupéré comprend une concentration plus élevée que celle de la solution de mélange Pm. Ceci s'explique par l'évaporation d'une grande partie de l'eau de la solution lors du passage de celle-ci dans la flamme. La concentration de la solution d'acide polyphosphorique P3 est généralement supérieure à 76%, de préférence supérieure à 80%, particulièrement de préférence supérieur à 86%, ou au moins 87% et même au moins 88%. Elle peut par exemple être comprise entre 76 et 90%, de préférence entre 86 et 89% P₂O₅. Des teneurs en P₂O₅ supérieures à 86% par voie humide sont rendues possibles grâce au procédé de la présente invention.

Le débit Q3 de la solution P3 d'acide polyphosphorique dans la chambre de combustion est représentatif de la capacité de production d'acide polyphosphorique P3. Exprimé par unité de puissance nominale [MW⁻¹] de la chambre de combustion, le débit Q3 est de préférence compris entre 240 et 1500 kg / (h MW), de préférence entre 500 et 1000 kg / (h MW).

Les gaz de combustion G1 sont notamment constitués de molécules contenant du phosphore, ces dernières pouvant être présentes en des quantités pouvant varier entre 0.5 et 40% en poids de P₂O₅, en général entre 0.5 et 35% en poids en P₂O₅, de préférence entre 1 et 30%, de préférence entre 2 et 25%, ou entre 5 et 20% en poids de P₂O₅. La température Tg1 des gaz de combustion G1 transférés est sensiblement inférieure à la température que peut atteindre la flamme car, comme discuté plus haut, la température dans l'unité de combustion chute lors de la réaction de polycondensation qui requiert beaucoup d'énergie, principalement pour évaporer l'eau de la réaction de polycondensation. Les gaz de combustion entrent dans le contacteur acide-gaz à une température Tg1 qui est de l'ordre de la température de polycondensation Tpc, et est généralement comprise entre 400 et 700°C, de préférence entre 500 et 600°C.

### Procédé - Boucle de recirculation et gaz de combustion

Comme discuté ci-dessus, une fraction de recirculation de la solution d'acide phosphorique enrichi P1 sortant du contacteur gaz-acide (1) est réintroduite dans le contacteur gaz-acide formant ainsi une boucle de recirculation alors qu'une fraction de pulvérisation Pp est acheminée vers la chambre de combustion (2). La fraction de recirculation est de préférence supérieure ou égale à la fraction de pulvérisation et est idéalement considérablement supérieure à la fraction de pulvérisation, avec des rapports Qp / Q2 du débit de pulvérisation Qp sur le débit de recirculation Q2 pouvant aller de 0.1 / 99.9 49 / 51(= 0.1 à 96%). De préférence, le rapport de débits Qp / Q2, est compris entre 1 / 99 et 5 / 95(= 1 à 5.3%).

Lors de leur introduction dans le contacteur gaz-acide, les flux d'alimentation F0 et de recirculation F2 peuvent être mélangés avant leur introduction dans le contacteur gaz-acide pour former un flux d'un mélange de la solution d'alimentation de contact P0 et de la solution d'acide phosphorique enrichi recirculé P2, tel qu'illustré dans les Figures 2&4. Alternativement, les flux F0 et F2 peuvent être contactés après avoir été introduits séparément dans le contacteur gaz-acide pour former un flux d'un mélange de la solution d'alimentation de contact P0 et de la solution d'acide phosphorique enrichi recirculé P2, tels qu'illustré dans les Figures 3&5.

La boucle de recirculation est l'élément distinctif majeur entre la présente invention et le procédé décrit dans EP2411325 B1. La conséquence principale de l'introduction d'une telle boucle de recirculation est que le rapport (Qg1 / (Q0+Q2)) entre le débit massique Qg1 du gaz de combustion G1 introduit dans le contacteur gaz-acide (1) et le débit massique total (Q0 + Q2) des flux d'alimentation F0 et de recirculation F2 introduits dans le contacteur gaz-acide (1), est beaucoup plus petit qu'en l'absence d'une telle boucle de recirculation. Le rapport (Qg1 / (Q0+Q2)) selon la présente invention est de préférence compris entre 0.1 et 50%, encore de préférence entre 0.5 et 20 ou inférieure à 10%, et est idéalement compris entre 1 et 7%. Dans un procédé selon EP2411325 B1 comprenant une mise en contact des gaz de combustion avec le flux d'alimentation F0 (i.e., Qg1 > 0, Q0 > 0) mais pas de flux de recirculation F2 (i.e., Q2 = 0), le rapport (Qg1 / Q0) est considérablement plus grand, avec des valeurs supérieures à 60%, en général supérieures à 100%, indicatif d'un débit de gaz de combustion Qg1 plus important que le débit d'alimentation Q0 de solution d'alimentation P0 du contacteur.

La boucle de recirculation permet donc de contrôler le rapport entre le débit de gaz de combustion G1 et le débit total (Q0+Q2) de solutions d'alimentation d'acide phosphorique P0 et de solution d'acide phosphorique enrichi recirculé P2. En particulier il permet d'augmenter considérablement la masse de solution d'acide phosphorique contactée avec le gaz de combustion. Ceci a plusieurs avantages.

D'une part, le transfert des molécules contenant du phosphore dans des gouttelettes et/ou vapeurs, contenues dans les gaz de combustion G1 vers le flux du mélange des solutions P0 et P2 est beaucoup plus important. La concentration en P₂O₅ de la solution de pulvérisation formée lors du contact avec les gaz de combustion est ainsi plus élevée que si le rapport de débits Qg1 / (Q0+Q2) avait été plus élevé, comme dans EP2411325 B1. Le meilleur contact gaz / liquide ainsi obtenu permet une meilleure récupération par la solution d'acide phosphorique enrichi P1 du phosphore contenu dans les gaz de combustion G1. De plus, les gaz de combustion G3 après le contact avec les flux F0 et F2 sont ainsi nettoyés de leur contenu en P₂O₅, allégeant leur traitement avant de les relâcher dans l'atmosphère.

D'autre part, avec de tels rapports de débits, la température Tg3 des gaz de combustion G3 après leur contact avec les flux F0 et F2 de solutions d'acide phosphorique est réduite beaucoup plus efficacement que dans le procédé décrit dans EP2411325 B1, ne nécessitant ainsi aucun autre échangeur de chaleur (ou du moins de moindre capacité), essentiel dans le procédé de EP2411325 B1 pour descendre la température des gaz de combustion à une valeur acceptable pour leur évacuation dans l'atmosphère.

### Dispositif

Le procédé de la présente invention peut être implémenté dans un dispositif comprenant une chambre de combustion (2), un contacteur gaz-acide (1) et diverses connexions fluidiques entre la chambre de combustion et le contacteur gaz-acide. Il est clair que le dispositif peut comprendre plusieurs chambres de combustion et/ou plusieurs contacteurs gaz-acide positionnés en parallèle ou en série.

### Dispositif - chambre de combustion (2)

La chambre de combustion (2) permet d'effectuer la polycondensation de la solution de mélange Pm par pulvérisation de celle-ci dans la flamme. La solution de mélange Pm est formée de la solution de pulvérisation Pp et, le cas échéant, mélangée à la solution d'alimentation directe Pd pour former une solution d'acide polyphosphorique P3. Les parois de la chambre de combustion doivent résister au caractère corrosif des solutions de pulvérisation Pp et d'alimentation directe Pd et aux hautes températures régnant à l'intérieur de celle-ci, il est préférable que les parois soient faites en carbure de silicium ou en carbone amorphe. Il est possible d'utiliser des doubles parois avec un gaz neutre ou les gaz de combustion circulant entre les deux parois, ce qui peut avoir des avantages en termes de température des parois, et imperméabilité de celles-ci aux solutions d'acide (poly)phosphorique.

La chambre de combustion (2) présente une ou plusieurs entrée(s) de pulvérisation (2pu) dans la chambre de combustion permettant l'introduction d'une solution de pulvérisation Pp à un débit Qp, ou d'une solution de mélange Pm à un débit (Qp + Qd), sous forme pulvérisée dans une unité de combustion située dans une partie supérieure de la chambre de combustion (cf. Figures 2&4). Dans une variante de l'invention, la chambre de combustion peut comprendre une ou plusieurs entrée(s) d'alimentation directe (2pdu) permettant l'introduction d'une solution d'alimentation directe Pd à un débit Qd séparée de la ou les entrée(s) de pulvérisation (2pu) (cf. Figures 3&5). Une alimentation en un gaz inerte, tel que de l'azote, peut être prévue pour optimiser la pulvérisation de la solution de pulvérisation Pp et/ou d'alimentation directe Pd et/ou de mélange Pm, qui peuvent avoir une viscosité importante à l'entrée de la chambre de combustion.

La chambre de combustion (2) comprend une unité de combustion (2c) agencée dans la partie supérieure de la chambre de combustion, et capable de former une flamme ayant une température d'au moins 1000°C, de préférence au moins 1500°C, et même au moins 1700°C, de préférence 1800°C ± 50°C, par combustion d'un combustible en présence d'oxygène. La température de la flamme peut être contrôlée en variant le débit d'oxygène alimentant la flamme. L'unité de combustion comprend :
- un brûleur,
- des connexions fluidiques entre le brûleur et, d'une part, une source d'oxygène et, d'autre part, une source de combustible (10) permettant d'alimenter la flamme, Le contrôle du rapport entre les apports en combustible et en oxygène vers le brûleur permettent de contrôler la température de la flamme. De préférence, le combustible utilisé est choisi parmi le gaz naturel, le méthane, le butane, le propane. La source d'oxygène est généralement de l'air ou de l'oxygène.

La chambre de combustion (2) est équipée d'un séparateur gaz-liquide (9) pour séparer la solution d'acide polyphosphorique P3 ainsi formée des gaz de combustion G1. Par exemple, les gaz de combustion peuvent être séparés de la solution d'acide polyphosphorique par un agrandissement de la surface transversale de débit, ce qui a pour conséquence de diminuer la vitesse d'écoulement et donc l'énergie cinétique des flux de gaz et d'acide polyphosphorique. Comme les flux s'écoulent du haut vers le bas, par la baisse de leur énergie cinétique, les gaz vont ralentir et peuvent être déviés vers un déflecteur qui les guide vers la sortie des gaz de combustion. Grâce à leur densité plus élevée, les gouttelettes d'acide polyphosphorique P3 continuent leur écoulement vers le bas par la gravité.

La chambre de combustion (2) présente une sortie d'acide polyphosphorique (2pd) de la chambre de combustion pour récupérer une phase liquide, et agencée en aval de l'unité de combustion qui est elle-même agencée en aval de l'entrée d'acide phosphorique enrichi (2pu) et l'entrée d'alimentation directe (2pdu). Le terme « aval » est exprimé par rapport au sens d'écoulement des solutions de pulvérisation Pp et d'acide polyphosphorique P3 dans la chambre de combustion. Comme expliqué plus haut, le sens d'écoulement est de préférence du haut vers le bas suivant la direction de la gravité. Le dispositif peut ainsi être équipé d'une cuve de stockage de l'acide polyphosphorique ainsi produit (non illustrée). De préférence, le dispositif comprend un échangeur de chaleur (11) agencé entre la sortie d'acide polyphosphorique (2pd) et la cuve de stockage, afin de refroidir la solution d'acide polyphosphorique d'une température comprise entre environ 350 et 650°C à une température de l'ordre de 100 à 150°C lorsqu'elle atteint la cuve de stockage.

Enfin, la chambre de combustion (2) est munie d'une sortie d'évacuation de gaz de combustion G1 issus de la flamme. Ces gaz de combustion ont une température Tg1 de l'ordre de la température de polycondensation Tpc et ne nécessitent pas d'être refroidis avant d'être introduits dans le contacteur gaz-acide.

### Dispositif - contacteur gaz-acide (2)

Le contacteur gaz-acide (1) permet de réchauffer et d'augmenter la concentration en P₂O₅ de la solution d'alimentation du contacteur introduite dans le contacteur, avant son entrée dans la chambre de combustion (2) afin d'optimiser le rendement et la consommation énergétique de la réaction de polycondensation.

Le contacteur gaz-acide (1) présente une entrée d'alimentation (1pu) reliée à une source d'une solution d'alimentation P0 du contacteur ou d'un mélange de solution d'alimentation P0 du contacteur et de solution d'acide phosphorique enrichi P2. Comme discuté plus haut, la solution d'alimentation P0 du contacteur comprend entre 0 et 70% P₂O₅, au moins 40%, de préférence au moins 50%, de préférence au moins 54%, encore de préférence au moins 58% ou même au moins 60% P₂O₅. L'entrée d'alimentation (1pu) doit être configurée pour permettre l'introduction de la solution d'alimentation P0 du contacteur à un débit d'alimentation Q0 ou l'introduction du mélange de solution d'alimentation P0 du contacteur et de solution d'acide phosphorique enrichi recirculée P2 à un débit (Q0 + Q2). La solution d'acide phosphorique enrichi recirculée, P2, peut également être introduite dans une entrée (1pru) d'acide phosphorique enrichi recirculé, P2, séparée de l'entrée d'alimentation (1pu).

Le contacteur gaz-acide (1) est de préférence un contacteur direct. Il comprend une entrée de gaz de combustion (1gu) permettant l'introduction dans le contacteur gaz-acide des gaz de combustion G1 provenant de la sortie d'évacuation de gaz de combustion G1. L'entrée d'alimentation (1gu) doit être dimensionnée pour permettre l'introduction des gaz de combustion G1 à un débit Qg1. Comme discuté plus haut, les gaz de combustion G1 mis en contact avec la solution d'alimentation P0 du contacteur permet (a) d'augmenter la température de solution d'alimentation P0 du contacteur, (b) évaporer une partie de l'eau de la solution d'alimentation P0 du contacteur et (c) échanger avec la solution P0 les gouttelettes et vapeurs de P₂O₅ contenues dans le gaz de combustion G1.

Le contacteur gaz-acide (1) est muni d'une entrée de recirculation (1pru), permettant l'introduction d'une solution d'acide phosphorique enrichi recirculé P2. Dans une variante de l'invention, les flux F0 et F2 sont mélangés avant d'être introduits dans le contacteur gaz-acide et l'entrée de recirculation est alors la même que l'entrée d'alimentation (1pu). Dans une variante alternative, les entrées d'alimentation (1 pu) et de recirculation (1pru) sont séparées. L'entrée de recirculation doit être dimensionnée pour permettre l'introduction de la solution d'acide phosphorique enrichi recirculé P2 à un débit d'alimentation Q2.

L'entrée de gaz (1gu), l'entrée d'alimentation (1 pu) et, si elle est séparée de celle-ci, l'entrée de recirculation (1pru) sont agencées pour permettre, d'une part,
- un contact entre les flux d'alimentation F0 et flux de recirculation F2 pour former un flux (F0 + F2) d'un mélange (P0+P2) de la solution d'alimentation P0 du contacteur et de la solution d'acide phosphorique enrichi recirculé P2 et, d'autre part,
- un contact du flux du mélange ainsi formé avec le flux des gaz de combustion G1.

L'entrée de gaz (1gu) est de préférence agencée de sorte que les gaz de combustion G1 (et dénommés G2 lors du contact) s'écoulent à co-courant avec les flux d'alimentation F0 et de recirculation F2 de solution d'acide phosphorique. Mais il est possible d'arranger l'entrée de gaz de sorte que les gaz de combustion s'écoulent à contre-courant des flux F0 et F2.

Le contacteur gaz-acide comprend de préférence un matériau de remplissage, au travers duquel percolent les flux d'alimentation F0 et de recirculation F2 de solutions d'acide phosphorique. Le matériau de remplissage est de préférence disposé sur un support perforé, par exemple une grille de support.

Le contacteur gaz-acide (1) comprend une ou plusieurs sorties d'acide phosphorique enrichi (1pd, 1prd), la ou les sorties d'acide phosphorique enrichi (1pd, 1prd) sont positionnées en aval de l'entrée de gaz (1gu), qui est elle-même positionnée en aval de l'entrée d'alimentation (1pu) et, si elle est séparée de celle-ci, l'entrée de recirculation (1pru). Le terme « aval » est exprimé par rapport au sens d'écoulement des flux d'alimentation et de recirculation des solutions d'alimentation d'acide phosphorique et d'acide phosphorique enrichi recirculé P2 dans le contacteur gaz-acide. La ou les sorties d'acide phosphorique enrichi (1pd, 1prd) permettent de sortir la solution d'acide phosphorique enrichi P1 formée dans le contacteur gaz-acide formée par le contact entre les flux F0 et F2 et les gaz de combustion G1.

Le contacteur gaz-acide (1) comprend un séparateur gaz-liquide permettant de séparer les liquides des gaz après le contact entre les gaz de combustion G1 et les solutions P0 et P1. Par exemple le contacteur gaz-acide peut comprendre un débrumiseur qui permet de récupérer d'éventuelles gouttelettes de liquide présentes dans le gaz de combustion contacté G3 avant sa sortie via la sortie de gaz (1gd).

Le contacteur gaz-acide (1) comprend également une sortie (1gd) de gaz de combustion, permettant d'évacuer du contacteur gaz-acide les gaz de combustion contactés G3 après leur contact avec le mélange des solutions P0 et P2, Le dispositif peut être suivi d'une tour de lavage des gaz de combustion contactés G3 situés en aval de la sortie (1gd) de gaz de combustion du contacteur gaz-acide, permettant d'éliminer les éventuels composés indésirables tels que par exemples les composés fluorés ou les composés soufrés que les gaz peuvent contenir avant de les relâcher dans l'atmosphère.

Le dispositif est équipé d'une connexion fluidique (6) de gaz de combustion reliant une extrémité (6u) couplée à la sortie d'évacuation des gaz de combustion de la chambre de combustion (2), à une extrémité (6d) couplée à l'entrée de gaz de combustion (1gu) dans le contacteur gaz-acide (1). La température dans cette connexion fluidique (6) doit de préférence être maintenue la plus élevée possible afin qu'au niveau de l'entrée (1gu) dans le contacteur gaz-acide, les gaz de combustion G1 aient une température aussi proche que possible de la température Tg1 qu'ils ont à la sortie de la chambre de combustion, soit d'environ 500 à 600°C.

Le dispositif est équipé d'une connexion fluidique de pulvérisation(3p) reliant une extrémité amont (3u) couplée à la sortie d'acide phosphorique enrichi (1pd) du contacteur gaz acide (1), à une extrémité avale (3d) couplée à l'entrée d'acide phosphorique enrichi (2pu) de la chambre de combustion (2). Comme la solution d'acide phosphorique enrichi P1 a une température et une concentration en P₂O₅ supérieures à celles de la solution d'alimentation P0 du contacteur, le rendement de la polycondensation dans la chambre de combustion est amélioré. Comme le transfert de molécules contenant du phosphore au départ des gaz de combustion G1 vers le mélange de solutions d'alimentation et de recirculation d'acide phosphorique P0 et P2 est meilleur que le transfert entre les gaz de combustion G1 et la solution d'alimentation P0 du contacteur décrit dans le dispositif de EP2411325 B1, le rendement obtenu avec le dispositif et le procédé de la présente invention est supérieur à celui obtenu dans EP2411325 B1.

Cette amélioration de transfert de molécules d'acide phosphorique et de rendement de la réaction de polycondensation est rendue possible grâce à la boucle de recirculation permettant de réintroduire dans le contacteur gaz-acide une partie du flux de solution d'acide phosphorique P1 sorti du même contacteur gaz-acide. Ainsi le dispositif comprend en outre une connexion fluidique de recirculation (3r) reliant une extrémité amont couplée soit
- à une sortie de solution d'acide phosphorique enrichi recirculé (1prd) du contacteur gaz-acide (1) , soit
- à un point d'embranchement (5v) avec la première connexion fluidique (3), soit
- à un point d'embranchement (4r) avec la première connexion fluidique (3u),
à une extrémité avale (3r) couplée à l'entrée de recirculation (1pru) ou (1pu) du contacteur gaz-acide.

Le dispositif est pourvu de moyens pour contrôler et maintenir un rapport, Qp / (Qp + Q2), entre un débit massique de pulvérisation Qp s'écoulant dans la première connexion fluidique (3) et un débit massique total (Qp + Q2) défini comme la somme du débit massique de pulvérisation Qp et d'un débit massique de recirculation Q2 s'écoulant dans la connexion fluidique de recirculation (3r) à une valeur inférieure à 50%, de préférence inférieure à 10%, de préférence inférieure à 5%, encore de préférence inférieure à 2.5% et dans lequel le rapport Qp / (Qp + Q2) a une valeur supérieure à 0.1%, de préférence supérieure à 0.5%.

Comme illustré à la Figure 2, les connexions fluidiques (3p) et (3r) peuvent être désolidarisées sur toute leur longueur entre le contacteur gaz-acide et la chambre de combustion avec, d'une part, la connexion fluidique de pulvérisation (3p) reliant une première sortie d'acide phosphorique enrichi (1pd) à l'entrée d'acide phosphorique enrichi (2pu) dans la chambre de combustion et, d'autre part, la connexion fluidique de recirculation (3r) reliant une seconde sortie d'acide phosphorique enrichi (1prd) à l'entrée d'acide phosphorique enrichi recirculé (1pu) du contacteur gaz-acide ou à la connexion d'alimentation (3a) alimentant le contacteur gaz-acide en solution d'alimentation P0 du contacteur. Chacune des connexions fluidiques de pulvérisation (3p) et de recirculation (3r) étant munie d'une pompe (4, 4r) dimensionnées pour maintenir à une valeur désirée le rapport, Qp / (Qp + Q2) ou d'un système de transfert de fluides.

Dans une variante alternative illustrée aux Figures 3 à 5 le contacteur gaz-acide est muni d'une sortie (1pd) unique d'acide phosphorique enrichi P1 du contacteur gaz-acide qui est couplée à une première connexion fluidique (3). Les parties amonts des connexions fluidiques de pulvérisation (3p) et de recirculation (3r) sont couplées à un point d'embranchement (5), formant ainsi avec la première connexion fluidique (3) un embranchement en T ou Y. Dans cette variante, on peut utiliser différents moyens pour contrôler et maintenir le rapport, Qp / (Qp + Q2) à la valeur désirée.

Dans une première variante illustrée à la Figure 5, les moyens pour assurer un rapport, Qp / (Qp + Q2) à la valeur désirée comprennent une pompe (4) agencée sur la connexion fluidique de pulvérisation (3p) et ayant une capacité de pompage d'un liquide à un débit de pulvérisation Qp et une pompe de recirculation (4r) agencée sur la connexion fluidique de recirculation (3r) et ayant une capacité de pompage d'un liquide à un débit de recirculation Q2,

Dans une seconde variante illustrée aux Figures 3 et 4, les moyens pour assurer un rapport, Qp / (Qp + Q2) comprennent une pompe (4) agencée sur la première connexion fluidique (3) en amont du point d'embranchement (5) et ayant une capacité de pompage d'un liquide à un débit principal (Qp+ Q2) et une ou plusieurs vannes (5v) (p.ex., une vanne à trois voies) agencées au point d'embranchement (5) et permettant de diviser le débit principal en un débit de pulvérisation Qp vers la connexion fluidique de pulvérisation (3p) et en un débit de recirculation Q2 vers la connexion fluidique de recirculation (3r),

Dans une troisième variante (non illustrée), les moyens pour contrôler le rapport, Qp / (Qp + Q2) comprennent une pompe (4) agencée sur la première connexion fluidique (3) en amont du point d'embranchement (5) et ayant une capacité de pompage d'un liquide à un débit principal (Qp+ Q2) et des tuyauteries formant les connexions fluidiques de pulvérisation (3p) et de recirculation (3r) dimensionnées de sorte à obtenir le rapport Qp / (Qp + Q2) désiré. Cette solution est moins flexible que les deux premières en ce qu'une fois les tuyauteries dimensionnées, le rapport Qp / (Qp + Q2) ne peut être varié facilement, ce qui n'est pas nécessairement un problème si le rapport ne doit pas varier pendant la durée de vie du dispositif.

### Solution d'acide polyphosphorique P3

La pulvérisation d'une solution de mélange Pm obtenu par le procédé de la présente invention dans une flamme permet de produire des solutions d'acide polyphosphorique P3 de caractéristiques inégalées à ce jour. Grâce à la haute teneur en P₂O₅ que peut avoir la solution de pulvérisation Pm propre au procédé de la présente invention et à sa température élevée au moment d'entrer dans la chambre de combustion, des solutions d'acide polyphosphorique de très hautes concentrations en P₂O₅ peuvent être produites par voie humide dont la valeur dépend *inter alia* de la température de polycondensation.

Dans le cas où la température de polycondensation, Tpc, de la solution de pulvérisation Pp lors de la réaction de polycondensation atteint au moins 500°C, de préférence au moins 600°C ou au moins 650°C, une solution d'acide polyphosphorique P3 jamais produite à ce jour est obtenue, sous forme d'un liquide visqueux, comprenant,
- une teneur en P₂O₅ d'au moins 86%, de préférence au moins 87%, encore de préférence au moins 88%,
- une teneur en composés organiques exprimés sous forme de Carbone Organique Total (= TOC) très basse, inférieure ou égale à 100 ppm, de préférence inférieure ou égale à 80 ppm, et
- une teneur en SiO₂ également très basse, inférieure ou égale à 100 ppm, de préférence inférieure ou égale à 80 ppm.

De préférence, la solution d'acide polyphosphorique P3 de la présente invention a une teneur en Fe inférieure ou égale à 10 ppm, de préférence inférieure ou égale à 5 ppm, une teneur en Sb inférieure ou égale à 10 ppm, de préférence inférieure ou égale à 5 ppm, et une teneur en SO₄ inférieure ou égale à 11 ppm, de préférence inférieure ou égale à 5 ppm. Les teneurs des différents composés ci-dessus sont exprimées par rapport à la solution d'acide polyphosphorique.

### Exemple de réalisation

Un dispositif pilote selon la présente invention a été construit et testé. Il comprend un contacteur gaz-acide (1) et une chambre de combustion (2). Les connexions fluidiques comprennent une connexion fluidique de pulvérisation (3p) totalement séparée et indépendante de la connexion de recirculation (3r) comme illustré à la Figure 2. Chacune des connexions fluidiques de pulvérisation (3p) et de recirculation (3r) sont munies d'une pompe (4, 4r) permettant de contrôler et maintenir constant le rapport de débits Qp / (Qp+Q2) à différentes valeurs comprises entre 0.75 et 6.7%. L'unité de combustion est connectée à une source de gaz naturel et à une alimentation en air dont les débits peuvent être contrôlés afin de contrôler la température de la flamme. La chambre de combustion est munie d'une entrée d'alimentation directe (2mu) telle qu'illustrée à la Figure 4.

Le Tableau 1 indique les fourchettes de concentrations en P₂O₅, débits, et températures des différents flux d'acide phosphorique P0 à P3 et de gaz de combustion G1, G3 testés avec le dispositif pilote. Les positions desdits flux dans un dispositif selon la présente invention sont indiquées à la Figure 3. La température de polycondensation Tpc était compris entre 400 and 650°C.

**Tableau 1 : fourchettes de compositions, débits, et températures des différents flux avec Qd = 0**

| **Flux** | **Fluide** | **Concentration (% P₂O₅)** | **Q (kg / h)** | **T (°C)** |
|---|---|---|---|---|
| F0 | P0 (liq) | > 40% P₂O₅ | Q0 = 105-445 | T0 = 20 - 100 |
| Fp | P1 (liq) | > 62% (> 70%) P₂O₅ | Qp = 150-400 | T1 = 200 - 300 |
| F2 | P2 (liq) | > 62% (> 70%) P₂O₅ | Q2 = 1,000-20,000 | T2 = 200 - 300 |
| Fd | Pd (liq) | 0 | Qd = 0 | Td = NA |
| gaz | G1 (gaz) | 0.5 - 10% P₂O₅ | Qg1 = 200-400 | Tg1 = 500 - 600 |
| F3 | P3 (liq) | > 76% (> 86%) P₂O₅ | Q3 = 150- 250 | T3 = 400 - 650 |
| gaz | G3 (gaz) | < 1% P₂O₅ | Qg3 = 200-400 | Tg3 = 50 - 100 |

On peut voir dans le Tableau1 qu'avec une solution d'alimentation P0 comprenant 62% P₂O₅, et une température de polycondensation Tpc = 630°C, une solution d'acide polyphosphorique P3 comprenant 88% P₂O₅ a été produite avec le dispositif pilote en appliquant un rapport de débits, Qp / (Qp + Q2) = 1%.

Le Tableau 2 liste une série de fourchettes de valeurs des différents paramètres adaptées pour la mise en oeuvre du procédé de la présente invention.

**Tableau 2 : Exemples de valeurs de paramètres adaptées au procédé de la présente invention**

| | **Ti °C** | | **xpi %[P₂0₅]** | | **Qi (kq / (h MW)** | |
|---|---|---|---|---|---|---|
| | **min** | **max** | **min** | **max** | **min** | **max** |
| F0 | 20 | 100 | 0% | 70% | 100 | 3000 |
| F1 | 200 | 300 | 5% | 80% | 600 | 123000 |
| F2 | 200 | 300 | 5% | 80% | 300 | 120000 |
| Fp | 200 | 300 | 5% | 80% | 300 | 3000 |
| Fd | 50 | 200 | 20% | 80% | 0 | 1500 |
| Fm | 20 | 300 | 20% | 80% | 600 | 3000 |
| F3 | 350 | 700 | 76% | 88% | 240 | 1500 |
| G1 | 500 | 600 | 0.5% | 5 | -- | -- |
| G3 | 100 | 250 | 0 | 1 | -- | -- |

| **#** | **Caractéristique** |
|---|---|
| 1 | Contacteur gaz-acide |
| 1gd | Sortie de gaz de combustion du contacteur gaz-acide |
| 1gu | Entrée de gaz de combustion dans le contacteur gaz-acide |
| 1pd | Sortie de solution d'acide phosphorique enrichi, P1, du contacteur gaz-acide |
| 1pu | Entrée d'alimentation de la solution de contact, P0, ou de mélange (P0+P2) dans le contacteur gaz-acide |
| 1pru | Entrée d'acide phosphorique enrichi de recirculation, P2, dans le contacteur gaz-acide (optionnelle). |
| 2 | Chambre de combustion |
| 2c | Unite de combustion |
| 2pd | Sortie d'acide polyphosphorique, P3, de la chambre de combustion |
| 2pdu | Entrée de solution d'alimentation directe, Pd, dans la chambre de combustion |
| 2pu | Entrée de solution d'acide de pulvérisation, Pp, dans la chambre de combustion ou entrée combinée des flux d'alimentation directe et des flux de pulvérisation |
| 3 | Première connexion fluidique |
| 3a | Connexion fluidique d'alimentation |
| 3d | Extrémité avale de la première connexion fluidique (3) ou de la connexion fluidique de pulvérisation (3p) |
| 3p | Connexion fluidique de pulvérisation |
| 3r | Connexion fluidique de recirculation vers le contacteur gaz-acide (1) |
| 3rd | Extrémité avale de la connexion fluidique de recirculation (3r) |
| 3u | Extrémité amont de la connexion fluidique de pulvérisation (3p) ou de la première connexion fluidique (3) |
| 4 | Pompe |
| 4r | Pompe de recirculation |
| 5v | Vanne ou jeu de vannes (ex., vanne à trois voies) |
| 6 | Connexion fluidique de gaz de combustion |
| 6d | Sortie de la connexion de gaz de combustion |
| 6u | Entrée de la connexion de gaz de combustion |
| 10 | Source de combustible pour l'unité de combustion (10) |
| 11 | Echangeur de chaleur |
| Fp | Flux de pulvérisation de solution d'acide phosphorique enrichi |
| F2 | Flux de recirculation de solution d'acide phosphorique enrichi recirculé |
| F3 | Flux de de solution d'acide polyphosphorique |
| Fd | Flux d'alimentation directe de solution d'alimentation directe Pd |
| Fp | Flux de pulvérisation de solution d'acide phosphorique enrichi |
| Fm | Flux de mélange de solution de mélange Fm (=Fd+ Fp) |
| G1 | Gaz de combustion |
| G3 | Gaz de combustion contactés |
| P0 | Solution d'alimentation du contacteur |
| P0+P2 | Mélange de la solution d'alimentation P0 du contacteur et de la solution d'acide phosphorique enrichi recirculé (P2) |
| P1 | Solution d'acide phosphorique enrichi |
| P2 | Solution d'acide phosphorique enrichi recirculé |
| P3 | Acide polyphosphorique |
| Pd | Solution d'alimentation directe |
| Pp | Solution de pulvérisation |
| Pm | Solution de mélange (= Pd + Pp) |
| Q0 | Débit d'alimentation de la solution d'alimentation P0 du contacteur |
| Q1 | Débit d'acide phosphorique enrichi en sortie du contacteur (= Q2 + Qp) |
| Q2 | Débit de recirculation de la solution d'acide phosphorique enrichi recirculé |
| Q3 | Débit de l'acide polyphosphorique |
| Qg1 | Débit des gaz de combustion vers le contacteur gaz-acide (1) |
| Qg2 | Débit des gaz de combustion dans le contacteur gaz-acide (1) |
| Qd | Débit de la solution d'alimentation directe Pd |
| Qp | Débit de pulvérisation de la solution de pulvérisation Pp |
| Qm | Débit de la solution de mélange Pm |
| Gg3 | Débit des gaz de combustion contactés hors du contacteur gaz-acide (1) |
| T0 | Température de la solution d'alimentation P0 du contacteur |
| T1 | Température de la solution d'acide phosphorique enrichi P1 |
| T2 | Température de la solution d'acide phosphorique enrichi recirculé P2 |
| T3 | Température de la solution d'acide polyphosphorique P3 |
| Tg1 | Température des gaz de combustion G1 |
| Tg3 | Température des gaz de combustion contactés G3 |

## Revendications

1. Procédé de production d'acide polyphosphorique P3 comprenant les étapes suivantes :
(a) introduire dans un contacteur gaz-acide (1), un flux d'alimentation F0 du contacteur d'une solution d'alimentation P0 d'acide phosphorique qui présente une concentration massique, xp0, comprise entre 0 et 70% P₂O₅,
(b) introduire dans le contacteur gaz-acide (1) un flux de recirculation F2 de solution d'acide phosphorique enrichi recirculé P2,
(c) introduire dans le contacteur gaz-acide (1) des gaz de combustion G1 ;
(d) contacter les flux d'alimentation F0 du contacteur et de recirculation F2 et les gaz de combustion G1 pour former, d'une part,
• une solution d'acide phosphorique enrichi P1 comprenant une concentration massique, xp1, qui est supérieure à xp0 (xp1 > xp0) et, d'autre part,
• des gaz de combustion contactés G3,
(e) séparer les gaz de combustion contactés G3 de la solution d'acide phosphorique enrichi P1, puis
• évacuer les gaz de combustion contactés G3 du contacteur gaz-acide (1), et
• sortir la solution d'acide phosphorique enrichi P1 du contacteur gaz-acide (1),
(f) former à partir de ladite solution d'acide phosphorique enrichi P1, d'une part,
• un flux de recirculation F2 de solution d'acide phosphorique enrichi recirculé P2 pour l'introduire dans le contacteur gaz-acide (1) tel que défini à l'étape (b) et, d'autre part,
• un flux de pulvérisation Fp de la solution d'acide phosphorique enrichi P1 pour l'introduire dans une chambre de combustion (2),
(g) pulvériser à travers une flamme brûlant dans la partie supérieure de la chambre de combustion (2) un flux de mélange Fm d'une solution de mélange Pm d'acide phosphorique, ayant une concentration massique xpm supérieure à celle du flux d'alimentation F0 du contacteur formé par, d'une part,
• la solution d'acide phosphorique enrichi P1 et optionnellement, d'autre part,
• un flux d'alimentation directe Fd d'une solution d'alimentation aqueuse directe Pd d'acide phosphorique à une concentration massique, xd, d'au moins 20%, de préférence d'au moins 40%,
pour :
• évaporer de l'eau et ainsi concentrer la solution de mélange Pm,
• polymériser les molécules de la solution de mélange Pm d'acide phosphorique pour former une solution d'acide polyphosphorique P3 et
• former des gaz de combustion G1,
(h) séparer la solution d'acide polyphosphorique P3 des gaz de combustion G1 et
• récupérer la solution d'acide acide polyphosphorique P3, et
• transférer les gaz de combustion G1 dans le contacteur gaz-acide (1) tel que défini à l'étape (c).

2. Procédé selon la revendication 1, dans lequel
• la solution d'alimentation P0 du contacteur comprend une concentration xp0 de 0 à 70%, de préférence au moins 54%, encore de préférence au moins 58% ou même au moins 60% P₂O₅.et dans lequel
• un débit Q0 de la solution d'alimentation P0 du contacteur dans le contacteur exprimé par unité de puissance nominale [MW⁻¹] de la chambre de combustion est de préférence compris entre 100 et 3000 kg / (h MW), de préférence entre 500 et 2500 kg / (h MW).

3. Procédé selon la revendication 1 ou 2, dans lequel,
• la solution d'acide phosphorique enrichi P1 est identique à la solution d'acide phosphorique recirculé P2 et comprend une concentration xp1 de 5 à 80%, de préférence au moins 60%, encore de préférence au moins 62% ou même au moins 65% P₂O₅ et dans lequel
• un débit total, Q1 = (Qp + Q2), de la solution P1 hors du contacteur exprimé par unité de puissance nominale [MW⁻¹] de la chambre de combustion est de préférence compris entre 600 et 123000 kg / (h MW), de préférence entre 1000 et 50000 kg / (h MW) et
• un rapport, Qp / (Qp + Q2), entre le débit massique Qp du flux de pulvérisation Fp et le débit massique total (Qp + Q2) est de préférence inférieur à 50%, de préférence inférieur à 10%, de préférence inférieur à 5%, encore de préférence inférieur à 2.5% et dans lequel le rapport Qp / (Qp + Q2) est supérieur à 0.1%, de préférence supérieur à 0.5%.

4. Procédé selon l'une quelconque des revendications précédentes, dans lequel,
• la solution d'alimentation directe d'acide phosphorique Pd comprend une concentration xpd de 20 à 80%, de préférence au moins 60%, encore de préférence au moins 62% ou même au moins 65% P₂O₅.et dans lequel
• un débit Qd de la solution d'alimentation directe Pd dans la chambre de combustion exprimé par unité de puissance nominale [MW⁻¹] de la chambre de combustion est de préférence compris entre 0 et 1500 kg / (h MW), de préférence entre 400 et 1000 kg / (h MW).

5. Procédé selon l'une quelconque des revendications précédentes, dans lequel,
• la solution d'alimentation P0 comprend au moins 40% P₂O₅, de préférence au moins 50% ou au moins 54%, encore de préférence au moins 58% ou même au moins 60% P₂O₅.

6. Procédé selon l'une quelconque des revendications 1 à 4, dans lequel
• la solution d'alimentation P0 comprend moins de 40% P₂O₅, de préférence moins de 30% ou moins de 20%, encore de préférence moins de 5% ou même 0% P₂O₅ et dans lequel un débit Qd de la solution d'alimentation directe Pd est non-nul.

7. Procédé selon l'une quelconque des revendications précédentes, dans lequel,
• la solution de mélange Pm comprend une concentration xpm de 15 à 80%, de préférence au moins 40%, de préférence au moins 65%, encore de préférence au moins 70% ou même au moins 75% de P₂O₅ et dans lequel, un débit Qd de la solution d'alimentation directe Pd est de préférence non-nul.
• un débit Qm de la solution de mélange Pm dans la chambre de combustion exprimé par unité de puissance nominale [MW⁻¹] de la chambre de combustion est de préférence compris entre 600 et 3000 kg / (h MW), de préférence entre 900 et 2000 kg / (h MW).

8. Procédé selon l'une quelconque des revendications précédentes, dans lequel,
• la solution d'acide polyphosphorique P3 comprend une concentration xp3 d'au moins 76% équivalent en unités de P₂O₅ de préférence supérieure à 80%, particulièrement de préférence supérieur à 88%, ou est de préférence comprise entre 76 et 90%, encore de préférence entre 86 et 88% et dans lequel,
• le débit Q3 de la solution P3 d'acide polyphosphorique dans la chambre de combustion exprimé par unité de puissance nominale [MW⁻¹] de la chambre de combustion est de préférence compris entre 240 et 1500 kg / (h MW), de préférence entre 600 et 3000 kg / (h MW).

9. Procédé selon l'une quelconque des revendications précédentes, dans lequel les flux d'alimentation F0 et de recirculation F2 sont soit,
• mélangés avant leur introduction dans le contacteur gaz-acide pour former un flux d'un mélange de la solution d'alimentation P0 du contacteur et de la solution d'acide phosphorique enrichi recirculé P2, soit
• contactés après avoir été introduits séparément dans le contacteur gaz-acide pour former un flux d'un mélange de la solution d'alimentation P0 du contacteur et de la solution d'acide phosphorique enrichi recirculé P2.

10. Procédé selon l'une quelconque des revendications précédentes, dans lequel les flux d'alimentation direct Fd et de solution de pulvérisation Fp sont soit,
• mélangés pour former le flux de mélange Fm avant d'être pulvérisés dans la flamme dans la chambre de combustion, soit
• pulvérisés séparément dans la chambre de combustion pour former le flux de mélange Fm dans la flamme ou juste avant d'atteindre la flamme.

11. Procédé selon l'une quelconque des revendications précédentes, dans lequel le contact entre les flux d'alimentation F0 du contacteur et de recirculation F2 et les gaz de combustion G1 à l'étape (d) s'effectue à co-courant ou à contre-courant, de préférence à co-courant en s'écoulant depuis une partie supérieure vers un partie inférieure du contacteur gaz-acide et dans lequel au cours de l'étape (d) de contact, un rapport (Qg1 / (QO+Q2)) entre un débit massique Qg1 du gaz de combustion G1 introduit dans le contacteur gaz-acide (1) et un débit massique total (Q0 + Q2) des flux d'alimentation de contact F0 et de recirculation F2 introduits dans le contacteur gaz-acide (1), est compris entre 0.1 et 50%, de préférence entre 0.5 et 10%, encore de préférence entre 1 et 7%.

12. Dispositif de production d'acide polyphosphorique P3 suivant un procédé selon l'une quelconque des revendications précédentes, comprenant :
(A) une chambre de combustion (2) présentant :
• une entrée d'acide phosphorique enrichi (2pu) dans la chambre de combustion permettant l'introduction à un débit d'une solution d'acide phosphorique enrichi P1 sous forme pulvérisée dans une unité de combustion (2c),
• une entrée d'alimentation directe (2pdu) dans la chambre de combustion ou en amont de l'entrée d'acide phosphorique enrichi (2pu) permettant l'introduction d'une solution d'alimentation directe Pd ou d'un mélange de solutions d'alimentation directe Pd et d'acide phosphorique enrichi P1 sous forme pulvérisée dans une unité de combustion (2c),
• l'unité de combustion (2c) étant agencée dans la partie supérieure de la chambre de combustion, et étant capable de former une flamme ayant une température d'au moins 1500°C par combustion d'un combustible, ladite unité de combustion comprenant :
o un brûleur,
o des connexions fluidiques entre le brûleur et, d'une part, une source d'oxygène et, d'autre part, une source de combustible (10) permettant d'alimenter la flamme,
• une sortie d'acide polyphosphorique (2pd) de la chambre de combustion pour récupérer une phase liquide, et agencée en aval de l'unité de combustion qui est elle-même agencée en aval de l'entrée d'acide phosphorique enrichi (2pu),
• une sortie d'évacuation de gaz de combustion G1 issu de la flamme
(B) un contacteur gaz-acide (1) présentant
• une entrée d'alimentation de contact (1pu) reliée à une source d'une solution d'alimentation P0 du contacteur, permettant l'introduction à un débit d'alimentation de contact Q0 d'une solution d'alimentation P0 du contacteur,
• une entrée de gaz de combustion (1gu) permettant l'introduction dans le contacteur gaz-acide des gaz de combustion G1 à un débit Qg1,
• une entrée de recirculation (1pru) identique ou différente de l'entrée d'alimentation de contact (1 pu), permettant l'introduction d'une solution d'acide phosphorique enrichi recirculé P2 à un débit de recirculation Q2,
• les entrées d'alimentation de contact (1 pu) et/ou de recirculation (1pru) et l'entrée de gaz (1gu) étant agencées pour permettre, d'une part,
o un contact entre le flux d'alimentation de contact F0 et flux de recirculation F2 pour former un flux d'un mélange de la solution d'alimentation P0 du contacteur et de la solution d'acide phosphorique enrichi recirculé P2 et, d'autre part
o un contact du mélange ainsi formé avec les gaz de combustion G1,
• une ou plusieurs sorties d'acide phosphorique enrichi (1pd),
(C) une connexion fluidique (6) de gaz de combustion reliant une extrémité (6u) couplée à la sortie d'évacuation des gaz de combustion de la chambre de combustion (2), à une extrémité (6d) couplée à l'entrée de gaz de combustion (1gu) dans le contacteur gaz-acide (1),
(D) une première connexion fluidique de pulvérisation (3p) reliant une extrémité amont (3u) couplée
• à la sortie d'acide phosphorique enrichi (1pd) du contacteur gaz acide (1) ou
• à un point d'embranchement (5) avec une première connexion fluidique (3) qui est couplée à la sortie d'acide phosphorique enrichi (1pd),
à une extrémité avale (3d) couplée à l'entrée d'acide phosphorique enrichi (2pu) dans la chambre de combustion (2)
**Caracterisé en ce que** le dispositif comprend en outre
(E) une connexion fluidique de recirculation (3, 3r) reliant une extrémité amont couplée,
• à une sortie d'acide phosphorique enrichi recirculé (1pd) du contacteur gaz-acide (1) ou
• à un point d'embranchement (5) avec la première connexion fluidique (3),
à une extrémité avale (3r) couplée,
• à l'entrée de recirculation (1pru) du contacteur gaz-acide (1) ou
• à une connexion d'alimentation de contact (3a) alimentant le contacteur gaz-acide en solution d'alimentation P0 du contacteur, et
(F) des moyens pour contrôler et maintenir un rapport, Qp / (Qp + Q2), entre un débit massique de pulvérisation Qp s'écoulant dans la connexion fluidique de pulvérisation (3p) et un débit massique total (Qp + Q2) défini comme la somme du débit massique de pulvérisation Qp et d'un débit massique de recirculation Q2 s'écoulant dans la connexion fluidique de recirculation (3r) à une valeur inférieure à 50%, de préférence inférieure à 10%, de préférence inférieure à 5%, encore de préférence inférieure à 2.5% et dans lequel le rapport Qp / (Qp + Q2) a une valeur supérieure à 0.1%, de préférence supérieure à 0.5%.

## Patentansprüche

1. Verfahren zur Herstellung von Polyphosphorsäure P3, umfassend die folgenden Schritte:
(a) Einleiten eines Zuführungsstroms F0 des Kontaktors aus einer Zuführungslösung P0 aus Phosphorsäure, die eine Massenkonzentration xp0 zwischen 0 und 70 % P₂O₅ aufweist, in einen Gas-Säure-Kontaktor (1),
(b) Einleiten eines Rezirkulationsstroms F2 aus einer Lösung aus rezirkulierter angereicherter Phosphorsäure P2 in den Gas-Säure-Kontaktor (1),
(c) Einleiten der Verbrennungsgase G1 in den Gas-Säure-Kontaktor (1);
(d) Kontaktieren des Zuführungsstroms F0 des Kontaktors und des Rezirkulationsstroms F2 und der Verbrennungsgase G1 zur Bildung einerseits
• einer Lösung aus angereicherter Phosphorsäure P1, die eine Massenkonzentration xp1 umfasst, die größer als xp0 ist (xp1 > xp0), und andererseits
• von kontaktierten Verbrennungsgasen G3,
(e) Trennen der kontaktierten Verbrennungsgase G3 von der Lösung aus angereicherter Phosphorsäure P1, dann
• Abführen der kontaktierten Verbrennungsgase G3 aus dem Gas-Säure-Kontaktor (1) und
• Herausleiten der Lösung aus angereicherter Phosphorsäure P1 aus dem Gas-Säure-Kontaktor (1),
(f) Bilden, ausgehend von der Lösung aus angereicherter Phosphorsäure P1, einerseits
• eines Rezirkulationsstroms F2 aus einer Lösung aus rezirkulierter angereicherter Phosphorsäure P2, um ihn wie im Schritt (b) definiert in den Gas-Säure-Kontaktor (1) einzuleiten, und andererseits
• eines Zerstäubungsstroms Fp aus der Lösung aus angereicherter Phosphorsäure P1, um ihn in eine Verbrennungskammer (2) einzuleiten,
(g) Zerstäuben, durch eine im oberen Teil der Verbrennungskammer (2) brennende Flamme hindurch, eines Gemischstroms Fm aus einer Gemischlösung Pm aus Phosphorsäure, der eine Massenkonzentration xpm aufweist, die größer als die des Zuführungsstroms F0 des Kontaktors ist, und der gebildet wird durch, einerseits,
• die Lösung aus angereicherter Phosphorsäure P1 und, optional, andererseits
• einen direkten Zuführungsstrom Fd aus einer direkten wässrigen Zuführungslösung Pd aus Phosphorsäure mit einer Massenkonzentration xd von mindestens 20 %, bevorzugt mindestens 40 %,
um:
• Wasser zu verdampfen und die Gemischlösung Pm so zu konzentrieren,
• die Moleküle der Gemischlösung Pm aus Phosphorsäure zu polymerisieren, um eine Polyphosphorsäurelösung P3 zu bilden, und
• Verbrennungsgase G1 zu bilden,
(h) Trennen der Polyphosphorsäurelösung P3 von den Verbrennungsgasen G1 und
• Rückgewinnen der Polyphosphorsäurelösung P3 und
• Weiterleiten der Verbrennungsgase G1 in den Gas-Säure-Kontaktor (1) wie im Schritt (c) definiert.

2. Verfahren nach Anspruch 1, bei dem
• die Zuführungslösung P0 des Kontaktors eine Konzentration xp0 von 0 bis 70 %, bevorzugt mindestens 54 %, noch bevorzugter mindestens 58 % oder sogar mindestens 60 % P₂O₅ umfasst und bei dem
• ein Durchsatz Q0 der Zuführungslösung P0 des Kontaktors im Kontaktor, ausgedrückt je Nennleistungseinheit [MW⁻¹] der Verbrennungskammer, bevorzugt zwischen 100 und 3000 kg/(h MW), bevorzugt zwischen 500 und 2500 kg/(h MW) beträgt.

3. Verfahren nach Anspruch 1 oder 2, bei dem
• die Lösung aus angereicherter Phosphorsäure P1 identisch zu der Lösung aus rezirkulierter Phosphorsäure P2 ist und eine Konzentration xp1 von 5 bis 80 %, bevorzugt mindestens 60 %, noch bevorzugter mindestens 62 % oder sogar mindestens 65 % P₂O₅ umfasst und bei dem
• ein Gesamtdurchsatz Q1 = (Qp + Q2) der Lösung P1 außerhalb des Kontaktors, ausgedrückt je Nennleistungseinheit [MW⁻¹] der Verbrennungskammer, bevorzugt zwischen 600 und 123000 kg/(h MW), bevorzugt zwischen 1000 und 50000 kg/(h MW) beträgt und
• ein Verhältnis Qp/(Qp + Q2) zwischen dem Massendurchsatz Qp des Zerstäubungsstroms Fp und dem Gesamtmassendurchsatz (Qp + Q2) bevorzugt weniger als 50 %, bevorzugt weniger als 10 %, bevorzugt weniger als 5 %, noch bevorzugter weniger als 2,5 % beträgt und bei dem das Verhältnis Qp/(Qp + Q2) mehr als 0,1 %, bevorzugt mehr als 0,5 % beträgt.

4. Verfahren nach einem der vorhergehenden Ansprüche, bei dem
• die direkte Zuführungslösung aus Phosphorsäure Pd eine Konzentration xpd von 20 bis 80 %, bevorzugt mindestens 60 %, noch bevorzugter mindestens 62 % oder sogar mindestens 65 % P₂O₅ umfasst und bei dem
• ein Durchsatz Qd der direkten Zuführungslösung Pd in der Verbrennungskammer, ausgedrückt je Nennleistungseinheit [MW⁻¹] der Verbrennungskammer, bevorzugt zwischen 0 und 1500 kg/(h MW), bevorzugt zwischen 400 und 1000 kg/(h MW) beträgt.

5. Verfahren nach einem der vorhergehenden Ansprüche, bei dem
• die Zuführungslösung P0 mindestens 40 % P₂O₅, bevorzugt mindestens 50 % oder mindestens 54 %, noch bevorzugter mindestens 58 % oder sogar mindestens 60 % P₂O₅ umfasst.

6. Verfahren nach einem der Ansprüche 1 bis 4, bei dem
• die Zuführungslösung P0 weniger als 40 % P₂O₅, bevorzugt weniger als 30 % oder weniger als 20 %, noch bevorzugter weniger als 5 % oder sogar 0 % P₂O₅ umfasst und bei dem ein Durchsatz Qd der direkten Zuführungslösung Pd ungleich null ist.

7. Verfahren nach einem der vorhergehenden Ansprüche, bei dem
• die Gemischlösung Pm eine Konzentration xpm von 15 bis 80 %, bevorzugt mindestens 40 %, bevorzugt mindestens 65 %, noch bevorzugter mindestens 70 % oder sogar mindestens 75 % P₂O₅ umfasst und bei dem ein Durchsatz Qd der direkten Zuführungslösung Pd bevorzugt ungleich null ist,
• ein Durchsatz Qm der Gemischlösung Pm in der Verbrennungskammer, ausgedrückt je Nennleistungseinheit [MW⁻¹] der Verbrennungskammer, bevorzugt zwischen 600 und 3000 kg/(h MW), bevorzugt zwischen 900 und 2000 kg/(h MW) beträgt.

8. Verfahren nach einem der vorhergehenden Ansprüche, bei dem
• die Polyphosphorsäurelösung P3 eine Konzentration xp3 von mindestens 76 Aquiv.-% an P₂O₅-Einheiten, bevorzugt mehr als 80 %, besonders bevorzugt mehr als 88 % umfasst oder bevorzugt zwischen 76 und 90 %, noch bevorzugter zwischen 86 und 88 % beträgt und bei dem
• der Durchsatz Q3 der Polyphosphorsäurelösung P3 in der Verbrennungskammer, ausgedrückt je Nennleistungseinheit [MW⁻¹] der Verbrennungskammer, bevorzugt zwischen 240 und 1500 kg/(h MW), bevorzugt zwischen 600 und 3000 kg/(h MW) beträgt.

9. Verfahren nach einem der vorhergehenden Ansprüche, bei dem der Zuführungsstrom F0 und der Rezirkulationsstrom F2 entweder
• vor ihrer Einleitung in den Gas-Säure-Kontaktor gemischt werden, um einen Strom aus einem Gemisch aus der Zuführungslösung P0 des Kontaktors und der Lösung aus rezirkulierter angereicherter Phosphorsäure P2 zu bilden, oder
• kontaktiert werden, nachdem sie getrennt in den Gas-Säure-Kontaktor eingeleitet wurden, um einen Strom aus einem Gemisch aus der Zuführungslösung P0 des Kontaktors und der Lösung aus rezirkulierter angereicherter Phosphorsäure P2 zu bilden.

10. Verfahren nach einem der vorhergehenden Ansprüche, bei dem der direkte Zuführungsstrom Fd und der Zerstäubungslösungsstrom Fp entweder
• gemischt werden, um den Gemischstrom Fm zu bilden, bevor sie in der Flamme in der Verbrennungskammer zerstäubt werden, oder
• getrennt in der Verbrennungskammer zerstäubt werden, um den Gemischstrom Fm in der Flamme oder unmittelbar vor dem Erreichen der Flamme zu bilden.

11. Verfahren nach einem der vorhergehenden Ansprüche, bei dem der Kontakt zwischen dem Zuführungsstrom F0 des Kontaktors und dem Rezirkulationsstrom F2 und den Verbrennungsgasen G1 im Schritt (d) im Gleichstrom oder im Gegenstrom, bevorzugt im Gleichstrom, erfolgt, wobei sie von einem oberen Teil zu einem unteren Teil des Gas-Säure-Kontaktors strömen, und bei dem während des Kontaktschritts (d) ein Verhältnis (Qg1/ (Q0 + Q2)) zwischen einem Massendurchsatz Qg1 des in den Gas-Säure-Kontaktor (1) eingeleiteten Verbrennungsgases G1 und einem Gesamtmassendurchsatz (Q0 + Q2) des in den Gas-Säure-Kontaktor (1) eingeleiteten Kontaktzuführungsstroms F0 und Rezirkulationsstroms F2 zwischen 0,1 und 50 %, bevorzugt zwischen 0,5 und 10 %, noch bevorzugter zwischen 1 und 7 % beträgt.

12. Vorrichtung zur Herstellung von Polyphosphorsäure P3 mit einem Verfahren nach einem der vorhergehenden Ansprüche, umfassend:
(A) eine Verbrennungskammer (2), die aufweist:
• einen Einlass für angereicherte Phosphorsäure (2pu) in der Verbrennungskammer, der das Einleiten einer Lösung aus angereicherter Phosphorsäure P1 in zerstäubter Form mit einem Durchsatz in eine Verbrennungseinheit (2c) ermöglicht,
• einen direkten Zuführungseinlass (2pdu) in der Verbrennungskammer oder stromauf des Einlasses für angereicherte Phosphorsäure (2pu), der das Einleiten einer direkten Zuführungslösung Pd oder eines Gemisches aus einer direkten Zuführungslösung Pd und einer Lösung aus angereicherter Phosphorsäure P1 in zerstäubter Form in eine Verbrennungseinheit (2c) ermöglicht,
• wobei die Verbrennungseinheit (2c) im oberen Teil der Verbrennungskammer angeordnet ist und in der Lage ist, durch Verbrennen eines Brennstoffs eine Flamme mit einer Temperatur von mindestens 1500 °C zu bilden, wobei die Verbrennungseinheit umfasst:
o einen Brenner,
o Fluidverbindungen zwischen dem Brenner und einer Sauerstoffquelle einerseits und einer Brennstoffquelle (10) andererseits, die es ermöglichen, die Flamme zu versorgen,
• einen Auslass für Polyphosphorsäure (2pd) der Verbrennungskammer, um eine flüssige Phase zurückzugewinnen, der stromab der Verbrennungseinheit angeordnet ist, die wiederum stromab des Einlasses für angereicherte Phosphorsäure (2pu) angeordnet ist,
• einen Auslass zum Abführen von Verbrennungsgas G1, das aus der Flamme hervorgeht
(B) einen Gas-Säure-Kontaktor (1), der aufweist:
• einen Kontaktzuführungseinlass (1pu), der mit einer Quelle einer Zuführungslösung P0 des Kontaktors verbunden ist und das Einleiten einer Zuführungslösung P0 des Kontaktors mit einem Kontaktzuführungsdurchsatz Q0 ermöglicht,
• einen Verbrennungsgaseinlass (1gu), der das Einleiten der Verbrennungsgase G1 mit einem Durchsatz Qg1 in den Gas-Säure-Kontaktor ermöglicht,
• einen Rezirkulationseinlass (1pru), der identisch mit oder verschieden von dem Kontaktzuführungseinlass (1pu) ist und das Einleiten einer Lösung aus rezirkulierter angereicherter Phosphorsäure P2 mit einem Rezirkulationsdurchsatz Q2 ermöglicht,
• wobei der Kontaktzuführungseinlass (1pu) und/oder der Rezirkulationseinlass (1pru) und der Gaseinlass (1gu) so angeordnet sind, dass sie einerseits ermöglichen
o einen Kontakt zwischen dem Kontaktzuführungsstrom F0 und dem Rezirkulationsstrom F2, um einen Strom aus einem Gemisch aus der Zuführungslösung P0 des Kontaktors und der Lösung aus rezirkulierter angereicherter Phosphorsäure P2 zu bilden, und andererseits
o einen Kontakt des so gebildeten Gemisches mit den Verbrennungsgasen G1,
• einen oder mehrere Auslässe für angereicherte Phosphorsäure (1pd),
(C) eine Verbrennungsgasfluidverbindung (6), die ein Ende (6u), das mit dem Auslass zum Abführen der Verbrennungsgase aus der Verbrennungskammer (2) gekoppelt ist, mit einem Ende (6d), das mit dem Einlass für Verbrennungsgas (1gu) in den Gas-Säure-Kontaktor (1) gekoppelt ist, verbindet,
(D) eine erste Zerstäubungsfluidverbindung (3p) zum Verbinden eines stromaufwärtigen Endes (3u), das gekoppelt ist
• mit dem Auslass für angereicherte Phosphorsäure (1pd) des Gas-Säure-Kontaktors (1) oder
• mit einem Anschlusspunkt (5) an eine erste Fluidverbindung (3), die mit dem Auslass für angereicherte Phosphorsäure (1pd) gekoppelt ist,
mit einem stromabwärtigen Ende (3d), das mit dem Einlass für angereicherte Phosphorsäure (2pu) in die Verbrennungskammer (2) gekoppelt ist, **dadurch gekennzeichnet, dass** die Vorrichtung ferner umfasst
(E) eine Rezirkulationsfluidverbindung (3, 3r) zum Verbinden eines stromaufwärtigen Endes, das gekoppelt ist
• mit einem Auslass für rezirkulierte angereicherte Phosphorsäure (1pd) des Gas-Säure-Kontaktors (1) oder
• mit einem Anschlusspunkt (5) an die erste Fluidverbindung (3),
mit einem stromabwärtigen Ende (3r), das gekoppelt ist
• mit dem Rezirkulationseinlass (1pru) des Gas-Säure-Kontaktors (1) oder
• mit einer Kontaktzuführungsverbindung (3a), die den Gas-Säure-Kontaktor mit Zuführungslösung P0 des Kontaktors versorgt, und
(F) Mittel zum Kontrollieren und Aufrechterhalten eines Verhältnisses Qp/(Qp + Q2) zwischen einem Zerstäubungsmassendurchsatz Qp, der in der Zerstäubungsfluidverbindung (3p) strömt, und einem Gesamtmassendurchsatz (Qp + Q2), der als die Summe aus dem Zerstäubungsmassendurchsatz Qp und einem Rezirkulationsmassendurchsatz Q2, der in der Rezirkulationsfluidverbindung (3r) strömt, definiert ist, auf einem Wert von weniger als 50 %, bevorzugt weniger als 10 %, bevorzugt weniger als 5 %, noch bevorzugter weniger als 2,5 %, und wobei das Verhältnis Qp/(Qp + Q2) einen Wert von mehr als 0,1 %, bevorzugt mehr als 0,5 % aufweist.

## Claims

1. Process for the production of polyphosphoric acid P3 comprising the following stages:
(a) introducing, into a gas/acid contactor (1), a feed stream F0 of the contactor of a feed solution P0 of phosphoric acid which exhibits a concentration by weight, xp0, of between 0% and 70% P₂O_{S},
(b) introducing, into the gas/acid contactor (1), a recirculation stream F2 of recirculated enriched phosphoric acid solution P2,
(c) introducing, into the gas/acid contactor (1), combustion gases G1,
(d) bringing into contact the feed stream F0 of the contactor, the recirculation stream F2 and the combustion gases G1, in order to form, on the one hand,
• an enriched phosphoric acid solution P1 comprising a concentration by weight, xp1, which is greater than xp0 (xp1 > xp0) and, on the other hand,
• contacted combustion gases G3,
(e) separating the contacted combustion gases G3 from the enriched phosphoric acid solution P1, then
• discharging the contacted combustion gases G3 from the gas/acid contactor (1) and
• taking the enriched phosphoric acid solution P1 out of the gas/acid contactor (1),
(f) forming, from said enriched phosphoric acid solution P1, on the one hand,
• a recirculation stream F2 of recirculated enriched phosphoric acid solution P2, in order to introduce it into the gas/acid contactor (1) as defined in stage (b) and, on the other hand,
• a spray stream Fp of the enriched phosphoric acid solution P1, in order to introduce it into a combustion chamber (2),
(g) spraying, through a burning flame in the upper part of the combustion chamber (2), a mixing stream Fm of a mixing solution Pm of phosphoric acid, having a concentration by weight xpm which is greater than that of the feed stream F0 of the contactor formed by, on the one hand,
• the enriched phosphoric acid solution P1 and optionally, on the other hand,
• a direct feed stream Fd of a direct aqueous feed solution Pd of phosphoric acid at a concentration by weight, xd, of at least 20%, preferably of at least 40%,
in order:
• to evaporate water and thus to concentrate the mixing solution Pm,
• to polymerize the molecules of the mixing solution Pm of phosphoric acid in order to form a polyphosphoric acid solution P3 and
• to form combustion gases G1,
(h) separating the polyphosphoric acid solution P3 from the combustion gases G1 and
• recovering the polyphosphoric acid solution P3, and
• transferring the combustion gases G1 into the gas/acid contactor (1) as defined in stage (c).

2. Process according to Claim 1, in which:
• the feed solution P0 of the contactor comprises a concentration xp0 of 0% to 70%, preferably at least 54%, more preferably at least 58% or even at least 60% P₂O₅, and in which
• a flow rate Q0 of the feed solution P0 of the contactor in the contactor, expressed per nominal power unit [MW⁻¹] of the combustion chamber, is preferably between 100 and 3000 kg/(h MW), preferably between 500 and 2500 kg/(h MW).

3. Process according to Claim 1 or 2, in which:
• the enriched phosphoric acid solution P1 is identical to the recirculated phosphoric acid solution P2 and comprises a concentration xp1 of 5% to 80%, preferably at least 60%, more preferably at least 62% or even at least 65% P₂O₅, and in which
• a total flow rate, Q1 = (Qp + Q2), of the solution P1 outside the contactor, expressed per nominal power unit [MW⁻¹] of the combustion chamber, is preferably between 600 and 123 000 kg/(h MW), preferably between 1000 and 50 000 kg/(h MW), and
• a ratio, Qp/(Qp + Q2), of the flow rate by weight Qp of the spray stream Fp to the total flow rate by weight (Qp + Q2) is preferably less than 50%, preferably less than 10%, preferably less than 5%, more preferably less than 2.5%, and in which the ratio Qp/(Qp + Q2) is greater than 0.1%, preferably greater than 0.5%.

4. Process according to any one of the preceding claims, in which:
• the phosphoric acid direct feed solution Pd comprises a concentration xpd of 20% to 80%, preferably at least 60%, more preferably at least 62% or even at least 65% P₂O₅, and in which
• a flow rate Qd of the direct feed solution Pd into the combustion chamber, expressed per nominal power unit [MW⁻¹] of the combustion chamber, is preferably between 0 and 1500 kg/(h MW), preferably between 400 and 1000 kg/(h MW).

5. Process according to any one of the preceding claims, in which:
• the feed solution P0 comprises at least 40% P₂O₅, preferably at least 50% or at least 54%, more preferably at least 58% or even at least 60% P₂O₅.

6. Process according to any one of Claims 1 to 4, in which:
• the feed solution P0 comprises less than 40% P₂O₅, preferably less than 30% or less than 20%, more preferably less than 5% or even 0% P₂O₅, and in which a flow rate Qd of the direct feed solution Pd is nonzero.

7. Process according to any one of the preceding claims, in which:
• the mixing solution Pm comprises a concentration xpm of 15% to 80%, preferably at least 40%, preferably at least 65%, more preferably at least 70% or even at least 75% of P₂O₅, and in which a flow rate Qd of the direct feed solution Pd is preferably nonzero,
• a flow rate Qm of the mixing solution Pm in the combustion chamber, expressed by nominal power unit [MW⁻¹] of the combustion chamber, is preferably between 600 and 3000 kg/(h MW), preferably between 900 and 2000 kg/(h MW).

8. Process according to any one of the preceding claims, in which:
• the polyphosphoric acid solution P3 comprises a concentration xp3 of at least 76% equivalent in P₂O₅ units, preferably greater than 80%, particularly preferably greater than 88%, or is preferably between 76% and 90%, more preferably between 86% and 88%, and in which
• the flow rate Q3 of the polyphosphoric acid solution P3 in the combustion chamber, expressed per nominal power unit [MW⁻¹] of the combustion chamber, is preferably between 240 and 1500 kg/(h MW), preferably between 600 and 3000 kg/(h MW).

9. Process according to any one of the preceding claims, in which the feed stream F0 and the recirculation stream F2 are either:
• mixed before they are introduced into the gas/acid contactor, in order to form a stream of a mixture of the feed solution P0 of the contactor and of the recirculated enriched phosphoric acid solution P2, or
• brought into contact after having been introduced separately into the gas/acid contactor, in order to form a stream of a mixture of the feed solution P0 of the contactor and of the recirculated enriched phosphoric acid solution P2.

10. Process according to any one of the preceding claims, in which the direct feed stream Fd and the spray solution stream Fp are either:
• mixed in order to form the mixing stream Fm before being sprayed into the flame in the combustion chamber, or
• sprayed separately into the combustion chamber in order to form the mixing stream Fm in the flame or immediately before reaching the flame.

11. Process according to any one of the preceding claims, in which contact between the feed stream F0 of the contactor and the recirculation stream F2 and the combustion gases G1 in stage (d) is carried out co-currentwise or countercurrentwise, preferably co-currentwise, by flowing from an upper part toward a lower part of the gas/acid contactor, and in which, during the contacting stage (d), the ratio (Qg1/(Q0 + Q2)) between a flow rate by weight Qg1 of the combustion gas G1 introduced into the gas/acid contactor (1) and a total flow rate by weight (Q0 + Q2) of the contact feed stream F0 and of the recirculation feed stream F2 introduced into the gas/acid contactor (1) is between 0.1% and 50%, preferably between 0.5% and 10%, more preferably between 1% and 7%.

12. Device for the production of polyphosphoric acid P3 following a process according to any one of the preceding claims, comprising:
(A) a combustion chamber (2) exhibiting:
• an enriched phosphoric acid inlet (2pu) in the combustion chamber, making possible the introduction at a flow rate of an enriched phosphoric acid solution P1 in the sprayed form into a combustion unit (2c),
• an inlet for direct feeding (2pdu) into the combustion chamber or upstream of the enriched phosphoric acid inlet (2pu), making possible the introduction of a direct feed solution Pd or of a mixture of direct feed solution Pd and of enriched phosphoric acid solution P1 in the sprayed form into a combustion unit (2c),
• the combustion unit (2c) being arranged in the upper part of the combustion chamber and being capable of forming a flame having a temperature of at least 1500°C by combustion of a fuel, said combustion unit comprising:
o a burner,
o fluid connections between the burner and, on the one hand, a source of oxygen and, on the other hand, a source of fuel (10) making it possible to feed the flame,
• an outlet for polyphosphoric acid (2pd) from the combustion chamber in order to recover a liquid phase, and arranged downstream of the combustion unit, which is itself arranged downstream of the enriched phosphoric acid inlet (2pu),
• an outlet for a discharge of combustion gas G1 resulting from the flame,
(B) a gas/acid contactor (1) exhibiting
• a contact feed inlet (1pu) connected to a source of a feed solution P0 of the contactor, making possible the introduction at a contact feed flow rate Q0 of a feed solution P0 of the contactor,
• an inlet for combustion gases (1gu) making possible the introduction, into the gas/acid contactor, of the combustion gases G1 at a flow rate Qg1,
• a recirculation inlet (1pru) identical to or different from the contact feed inlet (1pu), making possible the introduction of a recirculated enriched phosphoric acid solution P2 at a recirculation flow rate Q2,
• the contact feed inlet (1pu) and/or the recirculation inlet (1pru) and the gas inlet (1gu) being arranged in order to make possible, on the one hand,
o contact between the contact feed stream F0 and the recirculation stream F2, in order to form a stream of a mixture of the feed solution P0 of the contactor and of the recirculated enriched phosphoric acid solution P2 and, on the other hand,
o contact of the mixture thus formed with the combustion gases G1,
• one or more outlets for enriched phosphoric acid (1pd),
(C) a combustion gas fluid connection (6) linking one end (6u), coupled to the outlet for discharge of the combustion gases from the combustion chamber (2), to an end (6d) coupled to the inlet for combustion gases (1gu) into the gas/acid contactor (1),
(D) a first spray fluid connection (3p) linking an upstream end (3u), coupled:
• to the outlet for enriched phosphoric acid (1pd) of the gas/acid contactor (1) or
• to a branch point (5) with a first fluid connection (3) which is coupled to the outlet for enriched phosphoric acid (1pd), to a downstream end (3d) coupled to the enriched phosphoric acid inlet (2pu) into the combustion chamber (2),
**characterized in that** the device additionally comprises:
(E) a recirculation fluid connection (3, 3r) linking an upstream end, coupled,
• to an outlet for recirculated enriched phosphoric acid (1pd) of the gas/acid contactor (1) or
• to a branch point (5) with the first fluid connection (3),
to a downstream end (3r) coupled,
• to the recirculation inlet (1pru) of the gas/acid contactor (1) or
• to a contact feed connection (3a) feeding the gas/acid contactor with feed solution P0 for the contactor, and
(F) means for controlling and maintaining a ratio, Qp/(Qp + Q2), between a spray flow rate by weight Qp, flowing in the spray fluid connection (3p), and a total flow rate by weight (Qp + Q2) defined as the sum of the spray flow rate by weight Qp and of a recirculation flow rate by weight Q2 flowing in the recirculation fluid connection (3r), at a value of less than 50%, preferably less than 10%, preferably less than 5%, more preferably of less than 2.5%, and in which the ratio Qp/(Qp + Q2) has a value of greater than 0.1%, preferably of greater than 0.5%.
